# EUROPEAN PATENT APPLICATION

(11) **EP 4 772 995 A1**
(43) Date of publication of application: **08.07.2026**
(21) Application number: 24897938.7
(22) Date of filing: 06.11.2024
(51) Int. Cl.: G06F 3/16, G06F 3/01, G06F 1/16, H04S 7/00

(54) **WEARABLE ELECTRONIC DEVICE FOR ADJUSTING MAGNITUDE OF SOUND, OPERATION METHOD, AND RECORDING MEDIUM**

(30) Priority: 30.11.2023 KR 20230170818; 24.01.2024 KR 20240010822
(71) Applicant: Samsung Electronics Co., Ltd., Suwon-si, Gyeonggi-do 16677 (KR)
(72) Inventor: LEE, Wonjae, Suwon-si Gyeonggi-do 16677 (KR); KO, Yumi, Suwon-si Gyeonggi-do 16677 (KR); KIM, Sijung, Suwon-si Gyeonggi-do 16677 (KR); SON, Dongil, Suwon-si Gyeonggi-do 16677 (KR)
(74) Representative: Gulde & Partner
(86) International application number: PCT/KR2024/017391
(87) International publication number: WO 2025/116342

(57) **Abstract**

A method for operating a wearable electronic device comprises the operations of: displaying first content in a first virtual area corresponding to a first direction with respect to the wearable electronic device; displaying second content in a second virtual area corresponding to a second direction with respect to the wearable electronic device; outputting a first sound of the first content at a first magnitude and outputting a second sound of the second content at a second magnitude on the basis of identifying that the line of sight of a user wearing the wearable electronic device is directed in the first direction; and outputting the first sound at a third magnitude different from the first magnitude and outputting the second sound at a fourth magnitude different from the second magnitude on the basis of identifying that the line of sight of the user moves from the first direction to the second direction.

## Description

### [Technical Field]

The disclosure relates to a wearable electronic device for adjusting the volume of sound, an operation method, and a recording medium.

### [Background Art]

An increasing number of services and additional features are being offered through wearable electronic devices such as augmented reality (AR) glasses, video-see-through (VST) devices, and virtual reality (VR) devices. To meet the needs of various users and raise efficiency of using the electronic devices, communication service carriers or device manufacturers develop electronic devices with differentiated and diversified functionalities. Accordingly, various functions provided through wearable electronic devices are evolving.

The AR glasses, the VST devices, and the VR devices provide users with a realistic experience by displaying virtual images while worn on the user's body. The AR glasses, the VST devices, and the VR devices may replace the usability of smartphones in a variety of areas, such as gaming entertainment, education, and social networking services. Through the AR glasses, the VST devices, and the VR devices, users may be provided with life-like content and interact with the life-like content to feel like they are in a virtual world.

### [Disclosure of Invention]

### [Solution to Problems]

According to an aspect of the disclosure, a wearable electronic device includes: a first sensor; a speaker; a display; memory storing instructions; and a processor operatively connected with the first sensor, the speaker, the display, and the memory, wherein the instructions, when executed by the processor, cause the wearable electronic device to: display, through the display, first content in a first virtual area, which corresponds to a first direction with respect to the wearable electronic device, among a plurality of virtual areas, display, through the display, second content in a second virtual area, which corresponds to a second direction with respect to the wearable electronic device, among the plurality of virtual areas, based on identifying, through the first sensor, that a gaze of a user wearing the wearable electronic device is directed toward the first direction, output, through the speaker, a first sound of the first content at a first volume and a second sound of the second content at a second volume, wherein the first volume is different from the second volume, and based on identifying, through the first sensor, that the gaze of the user moves from the first direction to the second direction, output, through the speaker, the first sound at a third volume different from the first volume and the second sound at a fourth volume different from the second volume.

The instructions, when executed by the processor, may further cause the wearable electronic device to determine the third volume and the fourth volume based on a number of virtual areas between the first virtual area and the second virtual area, and wherein, as the number of the virtual areas between the first virtual area and the second virtual area increases, a difference between the first volume and the third volume may increase, and a difference between the second volume and the fourth volume may increase.

The instructions, when executed by the processor, may further cause the wearable electronic device to: determine an output volume of the first sound to be the third volume decreased from the first volume by a volume corresponding to a distance where the gaze of the user moves from the first direction to the second direction, and determine an output volume of the second sound to be the fourth volume increased from the second volume by the volume corresponding to the distance.

The instructions, when executed by the processor, may further cause the wearable electronic device to: based on identifying that the gaze of the user wearing the wearable electronic device is directed toward the first direction, apply a filter effect to the second sound, and output the second sound to which the filter effect is applied, and based on identifying that the gaze of the user moves from the first direction to the second direction, apply the filter effect to the first sound, and output the first sound to which the filter effect is applied and the second sound to which the filter effect is not applied.

The filter effect may include a dim effect.

The instructions, when executed by the processor, may further cause the wearable electronic device to output a specified sound related to at least one object included in the first content.

The instructions, when executed by the processor, may further cause the wearable electronic device to allow a position of a sound image of the specified sound to correspond to a position of the sound image of the second sound.

The instructions, when executed by the processor, may further cause the wearable electronic device to output, through the speaker, the specified sound at a specified volume regardless of a direction of a movement of the gaze of the user.

The instructions, when executed by the processor, may further cause the wearable electronic device to: identify a gesture of the user corresponding to a specified gesture for adjusting a position of the first virtual area in a state in which the gaze of the user is directed toward the first direction, adjust the position of the first virtual area, and based on the adjusted position of the first virtual area, adjust an output volume of the first sound.

The instructions, when executed by the processor, may further cause the wearable electronic device to: identify that the gaze of the user is directed toward the first direction in a state in which the wearable electronic device is worn on a head of the user and a first wearable electronic device is worn on a right wrist of the user, wherein the second direction corresponds to a right direction with respect to a direction of the gaze of the user, and obtain notification information related to the second content and transmit the notification information to the first wearable electronic device.

A position of a sound image of the first sound may correspond to the first direction, and a position of a sound image of the second sound may correspond to the second direction.

The wearable electronic device may further include a second sensor, wherein the instructions, when executed by the processor, may further cause the wearable electronic device to: based on identifying, through the first sensor, that the gaze of the user wearing the wearable electronic device is directed toward the first direction and identifying, through the second sensor, that the wearable electronic device is directed toward the first direction, output, through the speaker, the first sound of the first content at the first volume, and based on identifying, through the first sensor, that the gaze of the user moves from the first direction to the second direction and identifying, through the second sensor, that the wearable electronic device moves from the first direction to the second direction, output, through the speaker, the first sound at the third volume and the second sound at the fourth volume.

According to an aspect of the disclosure, a method for operating a wearable electronic device, includes: displaying, through a display of the wearable electronic device, first content in a first virtual area, which corresponds to a first direction with respect to the wearable electronic device, among a plurality of virtual areas; displaying, through the display of the wearable electronic device, second content in a second virtual area, which corresponds to a second direction with respect to the wearable electronic device, among the plurality of virtual areas; based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume; and based on identifying, through the first sensor, that the gaze of the user moves from the first direction to the second direction, outputting, through the speaker, the first sound at a third volume and the second sound at a fourth volume.

The method may further include determining the third volume and the fourth volume based on a number of virtual areas between the first virtual area and the second virtual area among the plurality of virtual areas, wherein a difference between the first volume and the third volume, and a difference between the second volume and the fourth volume may increase, as the number of the virtual areas between the first virtual area and the second virtual area increases.

The method may further include: determining an output volume of the first sound to be the third volume decreased from the first volume by a volume corresponding to a distance where the gaze of the user moves from the first direction to the second direction; and determining an output volume of the second sound to be the fourth volume increased from the second volume by a volume corresponding to the distance.

The method may further include: based on identifying that the gaze of the user wearing the wearable electronic device is directed toward the first direction, applying a filter effect to the second sound, and outputting the second sound to which the filter effect is applied; and based on identifying that the gaze of the user moves from the first direction to the second direction, applying the filter effect to the first sound, and outputting the first sound to which the filter effect is applied and the second sound to which the filter effect is not applied.

The filter effect may include a dim effect.

The method may further include outputting a specified sound related to at least one object included in the first content.

According to an aspect of the disclosure, a storage medium stores computer-readable instructions, the instructions, when executed by a processor of a wearable electronic device, enabling the wearable electronic device to perform at least one operation that includes: displaying, through a display of the wearable electronic device, first content in a first virtual area, which corresponds to a first direction with respect to the wearable electronic device, among a plurality of virtual areas; displaying, through the display of the wearable electronic device, second content in a second virtual area, which corresponds to a second direction with respect to the wearable electronic device, among the plurality of virtual areas; based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume; and based on identifying, through the first sensor, that the gaze of the user moves from the first direction to the second direction, outputting, through the speaker, the first sound at a third volume and the second sound at a fourth volume.

According to an aspect of the disclosure, a wearable electronic device includes: a sensor; a speaker; a display; memory storing instructions; and a processor operatively connected with the sensor, the speaker, the display, and the memory, wherein the instructions, when executed by the processor, cause the wearable electronic device to: display, through the display, first content in a first virtual area, which corresponds to a first direction with respect to the wearable electronic device, among a plurality of virtual areas, display, through the display, second content in a second virtual area, which corresponds to a second direction with respect to the wearable electronic device, among the plurality of virtual areas, based on identifying, through the sensor, that the wearable electronic device is directed toward the first direction, output, through the speaker, a first sound of the first content at a first volume and a second sound of the second content at a second volume, wherein a position of a sound image of the first sound corresponds to the first direction, and wherein a position of a sound image of the second sound corresponds to the second direction, and based on identifying, through the sensor, that the wearable electronic device moves from the first direction to the second direction, output, through the speaker, the first sound at a third volume and the second sound at a fourth volume.

### [Brief Description of Drawings]

The above and other aspects, features, and advantages of certain embodiments of the disclosure will be more apparent from the following description taken in conjunction with the accompanying drawings, in which:
FIG. 1 is a view illustrating an electronic device in a network environment according to various embodiments;
FIG. 2 is a perspective view illustrating a configuration of a wearable electronic device according to an embodiment of the disclosure;
FIGS. 3A and 3B are views illustrating front and rear sides of a wearable electronic device according to an embodiment;
FIG. 4 is a block diagram schematically illustrating a wearable electronic device according to an embodiment;
FIG. 5 is a flowchart illustrating an operation of outputting a sound for content displayed in a virtual area by a wearable electronic device according to an embodiment;
FIG. 6 is a flowchart illustrating an operation of adjusting the volume of sound for content displayed in a virtual area by a wearable electronic device according to an embodiment;
FIG. 7 is a flowchart illustrating an operation of adjusting the volume of sound for content displayed in a virtual area by a wearable electronic device according to an embodiment;
FIG. 8 is a flowchart illustrating an operation of adjusting the volume of sound for content displayed in a virtual area by a wearable electronic device according to an embodiment;
FIG. 9 is a flowchart illustrating an operation of outputting a filter effect-applied sound by applying a filter effect to a sound for content by a wearable electronic device according to an embodiment;
FIG. 10 is a flowchart illustrating an operation of outputting a specified sound related to an object included in content by a wearable electronic device according to an embodiment;
FIG. 11 is a view illustrating an operation of adjusting the volume of a sound for content displayed in a virtual area based on a moving direction of a user's gaze and/or a moving direction of a wearable electronic device, by the wearable electronic device according to an embodiment;
FIG. 12 is a view illustrating an operation of displaying a virtual object for adjusting the volume of a sound for content displayed in a virtual area by a wearable electronic device according to an embodiment;
FIG. 13A is a view illustrating an operation of outputting a filter effect-applied sound by applying a filter effect to a sound for content by a wearable electronic device according to an embodiment;
FIG. 13B is a view illustrating an operation of outputting a specified sound related to an object included in specified content by a wearable electronic device according to an embodiment;
FIG. 14 is a view illustrating an operation of transmitting notification information to a communicatively connected first wearable electronic device by a wearable electronic device according to an embodiment;
FIGS. 15A and 15B are views illustrating an operation of adjusting the output volume of sound by adjusting the position of a virtual area by a wearable electronic device according to an embodiment;
FIG. 16 is a flowchart illustrating an operation of outputting a sound for content displayed in a virtual area by a wearable electronic device according to an embodiment; and
FIG. 17 is a flowchart illustrating an operation of outputting a sound for content displayed in a virtual area by a wearable electronic device according to an embodiment.

### [Mode for the Invention]

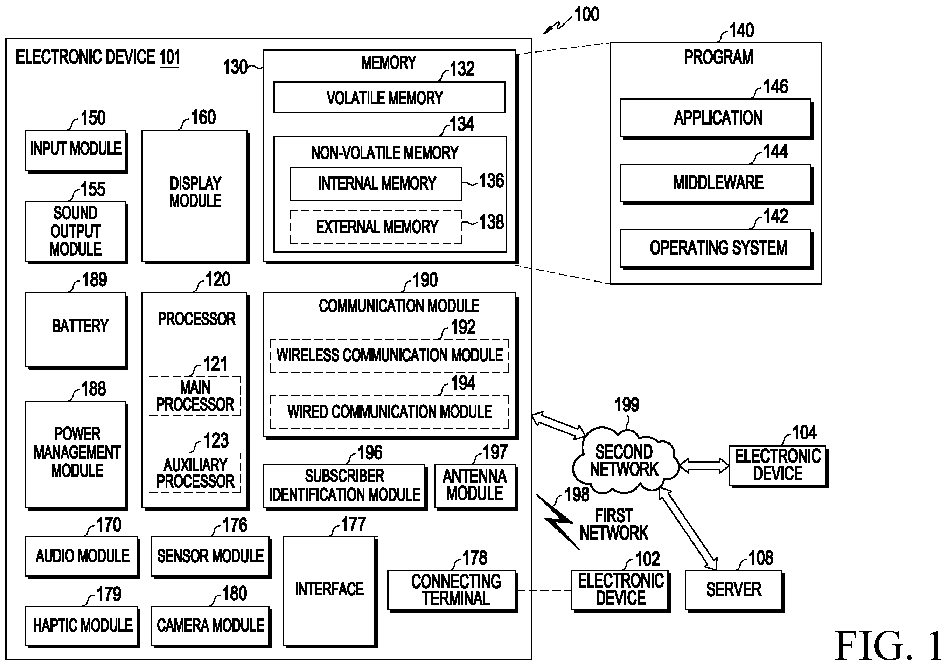

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a specified high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the specified high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

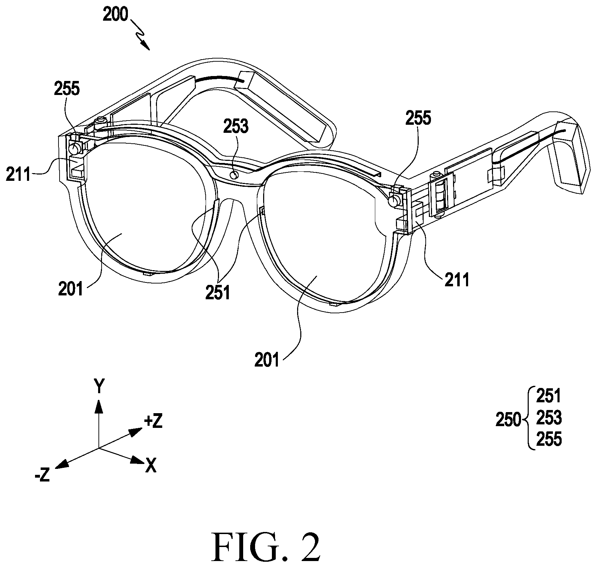

FIG. 2 is a perspective view illustrating a configuration of a wearable electronic device according to an embodiment of the disclosure;

Referring to FIG. 2, according to an embodiment of the disclosure, a wearable electronic device 200 may include at least one of a light output module 211, a display member 201, and a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

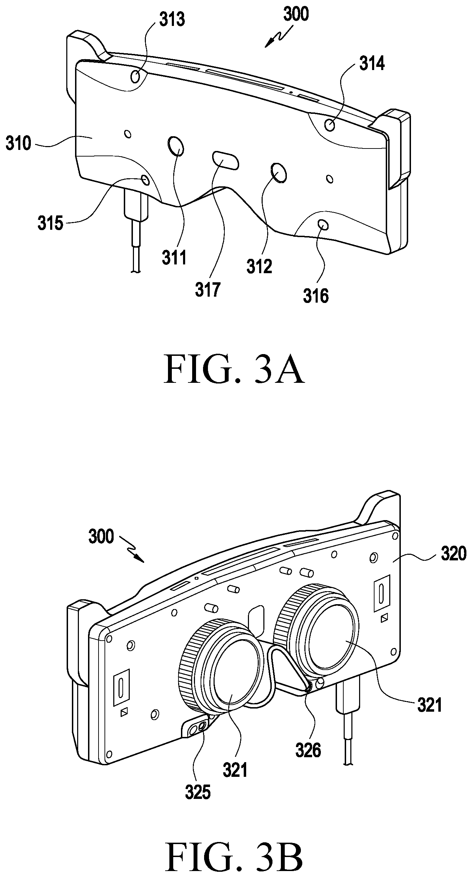

FIGS. 3A and 3B illustrate front and rear sides of a wearable electronic device according to an embodiment;

Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first side 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). Alternatively or additionally to the depth sensor 317, in an embodiment, the camera modules 313, 314, 315, and 316 may identify the distance to the object.

According to an embodiment, camera modules 325 and 326 for face recognition and/or a display 321 (and/or lens) may be disposed on the second side 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second side 320 of the wearable electronic device 300. In an embodiment, the wearable electronic device 300 may not include the camera modules 315 and 316 among the plurality of camera modules 313, 314, 315, and 316. In an embodiment, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

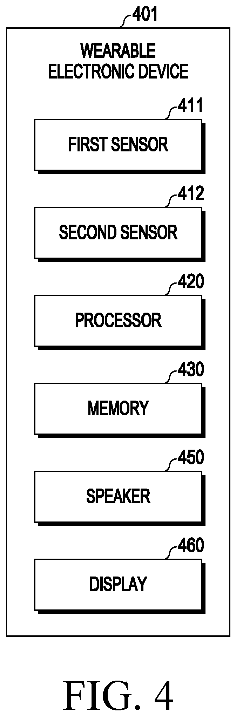

FIG. 4 is a block diagram schematically illustrating a wearable electronic device according to an embodiment.

Referring to FIG. 4, according to an embodiment, the wearable electronic device 401 may include a first sensor 411 (e.g., the sensor module 176 of FIG. 1), a second sensor 412 (e.g., the sensor module 176 of FIG. 1), a processor 420 (e.g., the processor 120 of FIG. 1), memory 430 (e.g., the memory 130 of FIG. 1), a speaker 450 (e.g., the sound output module 155 of FIG. 1), and a display 460 (e.g., the display 160 of FIG. 1).

According to an embodiment, the wearable electronic device 401 may be implemented to be the same as or similar to the electronic device 101 of FIG. 1, the wearable electronic device 200 of FIG. 2, and the wearable electronic device 300 of FIGS. 3A and 3B. According to an embodiment, the wearable electronic device 401 may be implemented as an augmented reality (AR) glass device, an extended reality (XR) device, a mixed reality (MR) device, a virtual reality (VR) device, or a video see through (VST) device. However, these are merely examples, and embodiments of the disclosure may be implemented as various devices.

According to an embodiment, the memory 410 may store at least one instruction that enables at least one operation of the wearable electronic device 401.

According to an embodiment, the wearable electronic device 401 may display content in a plurality of virtual areas through the display 460. For example, the plurality of virtual areas may represent areas (e.g., virtual windows) capable of displaying content. For example, the content may include various contents stored in the wearable electronic device 401 or obtained from an external electronic device. For example, the content may include an execution screen of an application stored in the wearable electronic device 401. For example, the content may include a video or an image stored in the memory 430.

The conventional wearable electronic device may output a sound of content, based on a preset volume or sound image, without considering the user's movement (e.g., the user's gaze or the user's direction (e.g., the moving direction of the wearable electronic device)). In other words, the conventional wearable electronic device may not perform a function of actively responding to the user's movement (e.g., the user's gaze or the user's direction) or the user's intention (e.g., a function of adjusting a sound).

The wearable electronic device 401 according to an embodiment may change the output magnitude (or output volume of sound) of the sound of the content displayed in the virtual area corresponding to the direction in which the user's gaze is directed, based on the direction in which the user's gaze is directed, regardless of the direction in which the wearable electronic device 401 is directed. Hereinafter, a volume of a sound may be referred to as a sound level or a level of the sound. The wearable electronic device 401 according to an embodiment may adjust, to a higher level, the output volume of the sound for the content displayed in the virtual area corresponding to the direction in which the user's gaze is directed. Accordingly, the wearable electronic device 401 according to an embodiment may effectively provide an environment capable of concentrating on content displayed in the virtual area corresponding to the direction in which the user's gaze is directed.

Alternatively or additionally, the wearable electronic device 401 according to an embodiment may change the output magnitude (or output volume of sound) of the sound of the content displayed in the virtual area corresponding to the direction in which the wearable electronic device 401 is directed, based on the direction in which the wearable electronic device 401 is directed, regardless of the direction in which the user's gaze is directed. The wearable electronic device 401 according to an embodiment may adjust, to a higher level, the output volume of the sound for the content displayed in the virtual area corresponding to the direction in which the wearable electronic device 401 is directed. Accordingly, the wearable electronic device 401 according to an embodiment may effectively provide an environment capable of concentrating on the content displayed in the virtual area corresponding to the direction in which the wearable electronic device 401 is directed.

Alternatively or additionally, when it is identified that the direction in which the user's gaze is directed and the direction in which the wearable electronic device 401 is directed are the same, the wearable electronic device 401 according to an embodiment may change the output magnitude (or the output volume of the sound) of the sound of the content displayed in the virtual area corresponding to the direction in which the user's gaze is directed. In this case, the wearable electronic device 401 according to an embodiment may adjust, to a higher level, the output volume of the sound for the content displayed in the virtual area corresponding to the direction in which the user's gaze is directed and the direction in which the wearable electronic device 401 is directed. Accordingly, the wearable electronic device 401 according to an embodiment may effectively provide an environment capable of concentrating on content displayed in a virtual area corresponding to the user's gaze and a direction in which the wearable electronic device 401 is directed. In other words, the wearable electronic device 401 according to an embodiment may adjust the sound of the content displayed in the virtual area in response to a movement according to the user's intention. Accordingly, the wearable electronic device 401 may perform a function of actively responding to the movement of the user, and may effectively provide an environment in which the user may concentrate on the content.

According to an embodiment, the speaker 450 may output a sound related to content. For example, the speaker 450 may output a spatialized sound related to content. For example, the spatialized sound may represent a head tracking-based sound to allow the user wearing the wearable electronic device 401 to feel as if the sound is output from a specific direction. For example, the processor 420 may output a first sound through the speaker 450 in a first direction (e.g., a front direction with respect to the wearable electronic device 401) indicating the direction of the user's gaze and the direction in which the wearable electronic device 401 is directed. Even when the wearable electronic device 401 and/or the user's gaze moves from the first direction to a second direction, the processor 420 may adjust (e.g., fix) the position of the sound image of the first sound for the first content corresponding to the first direction to the position corresponding to the first direction. Hereinafter, a sound image may be referred to as a virtual sound source. In other words, when the direction of the user's gaze and/or the direction in which the wearable electronic device 401 is directed moves from the first direction to the right direction with respect to the wearable electronic device 401, the user may feel as if the first sound is output from the left direction.

According to an embodiment, the processor 420 may display the first content in the virtual first area corresponding to the first direction with respect to the wearable electronic device 401 among the plurality of virtual areas through the display 460.

According to an embodiment, the processor 420 may display the second content in the second virtual area corresponding to the second direction with respect to the wearable electronic device 401 among the plurality of virtual areas through the display 460.

According to an embodiment, the processor 420 may identify the gaze of the user wearing the wearable electronic device 401 through the first sensor 411. For example, the first sensor 411 may be implemented as a sensor capable of identifying the gaze by identifying the eye (e.g., the pupil or the iris) of the user wearing the wearable electronic device 401. Alternatively or additionally, according to an embodiment, the processor 420 may identify the gaze of the user wearing the wearable electronic device 401 using a gaze tracking camera (e.g., the first camera module 251 of FIG. 2 or the face recognition camera modules 325 and 326 of FIG. 3).

According to an embodiment, the processor 420 may identify the direction in which the wearable electronic device 401 has moved through the second sensor 412. For example, the second sensor may be implemented as an acceleration sensor, a gyro sensor, or a gravity sensor (or a geomagnetic sensor).

According to an embodiment, the processor 420 may identify that the user's gaze is directed toward the first direction through the first sensor 411, and may identify that the wearable electronic device 401 is directed toward the first direction through the second sensor 412. For example, when the user's gaze is positioned within a specified distance from the center position of the virtual first area, the processor 420 may identify that the user's gaze is directed toward the first direction. For example, the specified distance may indicate a distance where the user's gaze is determined not to deviate from the virtual first area. For example, the specified distance may be automatically specified by the processor 420 or may be specified by the user.

According to an embodiment, based on identifying that the user's gaze is directed toward the first direction, the processor 420 may output the first sound for the first content in the first volume and may output the second sound for the second content in the second volume through the speaker 450. In an embodiment, the first volume may be greater than (i.e., louder than or higher than) the second volume. For example, the first volume and the second volume may be determined within a volume range supported by the wearable electronic device 401. Alternatively or additionally, according to an embodiment, based on the wearable electronic device 401 being directed toward the first direction, the processor 420 may output the first sound for the first content at the first volume and may output the second sound for the second content at the second volume through the speaker 450. Alternatively or additionally, according to an embodiment, based on the wearable electronic device 401 and the gaze of the user being directed toward the first direction, the processor 420 may output the first sound for the first content at the first volume and may output the second sound for the second content at the second volume through the speaker 450.

According to an embodiment, the first volume and the second volume may include a volume specified by the user or the processor 420. According to an embodiment, when one of the first volume and the second volume is specified, the other volume may be determined based on the distance between the virtual first area and the virtual second area.

According to an embodiment, the first volume may include a volume specified by the user or the processor 420. According to an embodiment, the second volume may be the volume determined based on the distance between the virtual first area and the virtual second area. For example, the processor 420 may determine the output volume of the second sound as the second volume decreased by the volume corresponding to the distance between the center position of the virtual first area and the center position of the virtual second area in the first volume.

According to an embodiment, the second volume may be a volume determined based on the number of virtual areas between the virtual first area and the virtual second area. For example, the horizontal lengths of each of the plurality of virtual areas may be the same. According to an embodiment, the processor 420 may identify the number of virtual areas between the virtual first area and the virtual second area using the camera. For example, the processor 420 may determine the output volume of the second sound as a second volume decreased from the first volume by the volume corresponding to the number of virtual areas between the virtual first area and the virtual second area. However, this is merely an example, and even when the respective horizontal lengths of the plurality of virtual areas are different from each other, the second volume may be determined based on the number of virtual areas between the virtual first area and the virtual second area.

According to an embodiment, the processor 420 may identify that the user's gaze moves from the first direction to the second direction through the first sensor 411. Alternatively or additionally, according to an embodiment, the processor 420 may identify that the wearable electronic device 401 moves from the first direction to the second direction through the second sensor 412. Alternatively or additionally, according to an embodiment, the processor 420 may identify that the user's gaze moves from the first direction to the second direction through the first sensor 411, and may identify that the wearable electronic device 401 moves from the first direction to the second direction through the second sensor 412.

According to an embodiment, when it is identified that the user's gaze moves from the first direction to the second direction, the processor 420 may identify the distance where the user's gaze (e.g., pupil, iris) moves from the first direction to the second direction. Alternatively or additionally, according to an embodiment, when it is identified that the wearable electronic device 401 moves from the first direction to the second direction, the processor 420 may identify the distance where the wearable electronic device 401 moves from the first direction to the second direction. Alternatively or additionally, according to an embodiment, when it is identified that the user's gaze and the wearable electronic device 401 move from the first direction to the second direction, the processor 420 may identify the distance where the wearable electronic device 401 moves from the first direction to the second direction and/or the distance where the user's gaze (e.g., pupil and iris) moves from the first direction to the second direction.

According to an embodiment, when it is identified that the user's gaze moves from the first direction to the second direction, the processor 420 may adjust the first volume of the first sound and adjust the second volume of the second sound, based on the distance where the user's gaze (e.g., pupil, iris) moves from the first direction to the second direction. Alternatively or additionally, according to an embodiment, when it is identified that the wearable electronic device 401 moves from the first direction to the second direction, the processor 420 may adjust the first volume of the first sound and the second volume of the second sound, based on the distance where the wearable electronic device 401 moves from the first direction to the second direction.

Alternatively or additionally, according to an embodiment, when it is identified that the wearable electronic device 401 and the user's gaze move from the first direction to the second direction, the processor 420 may adjust the first volume of the first sound and adjust the second volume of the second sound based on the distance where the user's gaze (e.g., pupil, iris) moves from the first direction to the second direction and/or the distance where the wearable electronic device 401 moves. For example, the processor 420 may adjust the first volume of the first sound and adjust the second volume of the second sound, based on the average value of the distance where the user's gaze (e.g., pupil or iris) moves from the first direction to the second direction and the distance where the wearable electronic device 401 moves. For example, the processor 420 may adjust the first volume of the first sound and adjust the second volume of the second sound, based on the greater or the smaller of the distance where the user's gaze (e.g., pupil or iris) moves from the first direction to the second direction and the distance where the wearable electronic device 401 moves.

According to an embodiment, a lookup table indicating the relationship between the distance where the wearable electronic device 401 or the user's gaze moves from the first direction to the second direction and the volume of sound may be stored in the memory 430. According to an embodiment, the processor 420 may determine the output volume of the first sound as the third volume decreased by the volume corresponding to the distance where the wearable electronic device 401 or the user's gaze moves from the first direction to the second direction, using the lookup table. According to an embodiment, the processor 420 may determine the output volume of the second sound to be the fourth volume, which is increased by the volume corresponding to the distance where the wearable electronic device 401 or the user's gaze moves from the first direction to the second direction, using the lookup table.

According to an embodiment, the horizontal length and the vertical length of each of the plurality of virtual areas may be the same as each other. According to an embodiment, the processor 420 may determine the output volume of the first sound and determine the volume of the second sound based on the number of virtual areas between the first virtual area and the second virtual area among the plurality of virtual areas. According to an embodiment, a lookup table indicating the relationship between the number of virtual areas and the volume of sound may be stored in the memory 430. According to an embodiment, the processor 420 may determine the output volume of the first sound as the third volume decreased from the first volume by the volume corresponding to the number of virtual areas between the virtual first area and the virtual second area, using the lookup table. According to an embodiment, the processor 420 may determine the output volume of the second sound as the fourth volume increased from the second volume by the volume corresponding to the number of virtual areas between the virtual first area and the virtual second area, using the lookup table. For example, as the number of virtual areas between the virtual first area and the virtual second area increases, the difference between the first volume and the third volume may increase, and the difference between the second volume and the fourth volume may increase. Accordingly, when the respective horizontal lengths of the plurality of virtual areas are the same as each other, the wearable electronic device 401 according to an embodiment may determine the output volume of the sound based on the number of virtual areas between the first virtual area corresponding to the first direction and the second virtual area, thereby reducing the time and resources required to calculate the output volume of the sound. However, this is merely an example, and even when the respective horizontal lengths and vertical lengths of the plurality of virtual areas are different from each other, the second volume may be determined based on the number of virtual areas between the first virtual area and the second virtual area.

According to an embodiment, based on identifying that the user's gaze moves from the first direction to the second direction, the processor 420 may output the first sound decreased from the first volume to the third volume through the speaker 450, and may output the second sound increased from the second volume to the fourth volume. Alternatively or additionally, according to an embodiment, based on identifying that the wearable electronic device 401 moves from the first direction to the second direction, the processor 420 may output the first sound decreased from the first volume to the third volume and may output the second sound increased from the second volume to the fourth volume through the speaker 450. Alternatively or additionally, according to an embodiment, based on identifying that the wearable electronic device 401 and the user's gaze move from the first direction to the second direction, the processor 420 may output the first sound decreased from the first volume to the third volume and may output the second sound increased from the second volume to the fourth volume through the speaker 450.

According to an embodiment, based on identifying that the moving direction of the user's gaze and the moving direction of the wearable electronic device 401 do not correspond to each other, the processor 420 may maintain the output volume of the first sound as the first volume and maintain the output volume of the second sound as the second volume.

Alternatively or additionally, according to implementation, when the moving direction of the user's gaze and the moving direction of the wearable electronic device 401 do not correspond to each other, the processor 420 may determine the output volume of the first sound and the output volume of the second sound based on the moving direction of the wearable electronic device 401. For example, when it is identified that the wearable electronic device 401 moves from the first direction to the second direction and the user's gaze does not move from the first direction to the second direction, the processor 420 may adjust the first volume of the first sound and adjust the second volume of the second sound based on the distance where the wearable electronic device 401 moves from the first direction to the second direction.

According to an embodiment, when it is identified that the user's gaze moves from the first direction to the second direction, the processor 420 may display a virtual object for adjusting the output volume of the first sound and the output volume of the second sound after a specified time (e.g., 2 seconds) elapses from the time point at which the movement of the user's gaze is identified. For example, since the user may move the gaze unintentionally, the specified time may be set to identify that the corresponding movement is according to the user's intention.

Alternatively or additionally, according to an embodiment, when it is identified that the wearable electronic device 401 moves from the first direction to the second direction, the processor 420 may display a virtual object for adjusting the output volume of the first sound and the output volume of the second sound after a specified time (e.g., 2 seconds) elapses from the time point at which the movement of the wearable electronic device 401 is identified. For example, since the wearable electronic device 401 may be moved without the user's intention, the specified time may be set to identify that the corresponding movement is according to the user's intention.

Alternatively or additionally, according to an embodiment, when it is identified that the user's gaze moves from the first direction to the second direction and the wearable electronic device 401 moves from the first direction to the second direction, the processor 420 may display a virtual object for adjusting the output volume of the first sound and the output volume of the second sound after a specified time (e.g., 2 seconds) elapses from the time point at which the movement is identified. For example, the specified time may indicate a time for determining whether the directions in which the user's gaze and the wearable electronic device 401 are directed match each other (e.g., determining whether the user's gaze and the wearable electronic device 401 are directed toward the same direction (e.g., the second direction)). For example, since the user may move the gaze and the wearable electronic device 401 unintentionally, the specified time may be set to identify that the corresponding movement is according to the user's intention.

According to an embodiment, when a user input (or a user gesture) for selecting a virtual object is identified, the processor 420 may output the first sound decreased from the first volume to the third volume and may output the second sound increased from the second volume to the fourth volume through the speaker 450. For example, the user input (or user gesture) may include at least one of a touch input (or gesture), a drag input (or gesture), or a pinch input (or gesture). However, this is an example, and embodiments of the disclosure may include various user inputs (or user gestures).

According to an embodiment, the processor 420 may apply a filter effect to the second sound based on identifying that the user's gaze is directed toward the first direction regardless of the direction of the wearable electronic device 401. For example, the filter effect may include a dim effect. For example, the filter effect may include an effect of outputting or blocking a sound of a specific frequency band using at least one of a low pass filter (LPF), a high pass filter (HPF), a band pass filter (BPF), or a band reject filter (BRF). According to an embodiment, the processor 420 may output a first sound to which the filter effect is not applied, and may output a second sound to which the filter effect is applied.

Alternatively or additionally, according to an embodiment, the processor 420 may apply a filter effect to the second sound based on identifying that the wearable electronic device 401 is directed toward the first direction regardless of the direction of the user's gaze.

Alternatively or additionally, according to an embodiment, the processor 420 may apply a filter effect to the second sound based on identifying that the wearable electronic device 401 and the user's gaze are directed toward the first direction.

According to an embodiment, the processor 420 may apply a filter effect to the first sound based on identifying that the user's gaze moves from the first direction to the second direction. According to an embodiment, the processor 420 may output the first sound to which the filter effect is applied, and may output the second sound to which the filter effect is not applied.

Alternatively or additionally, according to an embodiment, the processor 420 may apply a filter effect to the first sound based on identifying that the wearable electronic device 401 moves from the first direction to the second direction regardless of the moving direction of the user's gaze.

Alternatively or additionally, according to an embodiment, the processor 420 may apply a filter effect to the first sound based on identifying that the user's gaze and the wearable electronic device 401 move from the first direction to the second direction.

According to an embodiment, the processor 420 may identify a user input for designating (or selecting) the first content displayed in the virtual first area among the plurality of virtual areas. According to an embodiment, the processor 420 may analyze the first content specified by the user (e.g., analyze the content or scene of the first content). According to an embodiment, the processor 420 may identify at least one object included in the first content. The processor 420 may analyze the first content (e.g., analyze the content or scene of the first content) based on the identified at least one object. For example, when a tree, a bird, and a stream are included in the first content, the processor 420 may determine that the corresponding content is a content indicating a forest. Alternatively or additionally, when the first content includes a planet or a space, the processor 420 may determine that the corresponding content is content representing the universe. For example, the processor 420 may identify at least one object using the artificial intelligence model stored in the memory 430, or may identify at least one object by an external electronic device or a server.

According to an embodiment, the processor 420 may output a specified sound related to the first content. For example, the processor 420 may output a specified sound related to at least one object included in the first content. For example, when it is identified that the first content is the content indicating the forest, the processor 420 may output a specified sound (e.g., a bird sound and/or a stream sound) related to the forest. For example, the specified sound may include a sound stored in the memory 430 or obtained from an external electronic device. According to an embodiment, the processor 420 may determine the position of the sound image of the specified sound to correspond to the position of the sound image of the second sound. In this case, while outputting the first sound and the second sound, the processor 420 may output a specified sound related to at least one object included in the first content based on the position of the sound image of the second sound in the specified volume. For example, when the first content is an image including a bird, the processor 420 may determine the specified sound as a bird sound. For example, when the first content is an image including the sea, the processor 420 may determine the specified sound as a wave sound. For example, when the first content is an image including a forest, the processor 420 may determine the specified sound as a wind sound.

According to an embodiment, the processor 420 may convert the first sound of the first content into text and store the converted text in the memory 430. For example, the text may include lyrics of the first sound and/or onomatopoeia related to the first sound. According to an embodiment, the processor 420 may convert the second sound of the second content into text and store the text. For example, the processor 420 may convert sound into text using an artificial intelligence model stored in the memory 430, or may convert sound into text by an external electronic device or a server. For example, the processor 420 may convert the first sound of the first content into text and convert the second sound of the second content into text using a speech recognition model stored in the memory 430.

According to an embodiment, the processor 420 may identify a user input or a user gesture for adjusting the position of the virtual first area in a state in which the user's gaze is directed toward the first direction and/or the wearable electronic device 401 is directed toward the first direction. According to an embodiment, the processor 420 may identify that the user input corresponds to the specified input or that the user gesture corresponds to the specified gesture. According to an embodiment, the processor 420 may adjust the position of the virtual first area. According to an embodiment, the processor 420 may adjust the first volume of the first sound to a volume corresponding to the adjusted position, based on the adjusted position of the virtual first area. According to an embodiment, the processor 420 may identify that the wearable electronic device 401 and the first wearable electronic device are worn on the user's body. According to an embodiment, the first wearable electronic device may include a wearable electronic device wearable on a wrist. According to an embodiment, the processor 420 may identify that the first wearable electronic device is worn on the user's right wrist. For example, the processor 420 may display, through the display 460, a user interface for selecting a body part on which the first wearable electronic device is worn. The processor 420 may identify a user input indicating that the first wearable electronic device is worn on the right wrist through the user interface. The processor 420 may identify that the first wearable electronic device is worn on the user's right wrist, based on a user input. However, this is merely an example, and the wearable electronic device 401 may identify the body part of the user wearing the first wearable electronic device through various methods. According to an embodiment, the processor 420 may identify notification information about the second content displayed in the virtual second area corresponding to the second direction in a state in which the user's gaze is directed toward the first direction and/or the wearable electronic device 401 is directed toward the first direction. In this case, the second direction may indicate a right direction with respect to the wearable electronic device 401. According to an embodiment, the processor 420 may transmit notification information about the second content to the first wearable electronic device. According to an embodiment, the first wearable electronic device may output notification information about the second content as vibration or voice. For example, the second content may include an execution screen of a music application of the wearable electronic device 401. The notification information may include information indicating that the currently played music is terminated or information indicating that new music is played. For example, the second content may further include an execution screen of a text application of the wearable electronic device 401. The notification information may include information indicating that the message is obtained from the external electronic device. However, this is an example, and the notification information and the second content may not be limited to the above example.

According to an embodiment, when notification information about the second content displayed in the virtual second area corresponding to the second direction is identified in a state in which the user's gaze is directed toward the first direction and/or the wearable electronic device 401 is directed toward the first direction, the processor 420 may output the notification information about the second content by vibration.

In some embodiments, operations of the wearable electronic device 401 described below may be performed by the processor 420. In some embodiments, the operations performed by the processor 420 are performed by the wearable electronic device 401.

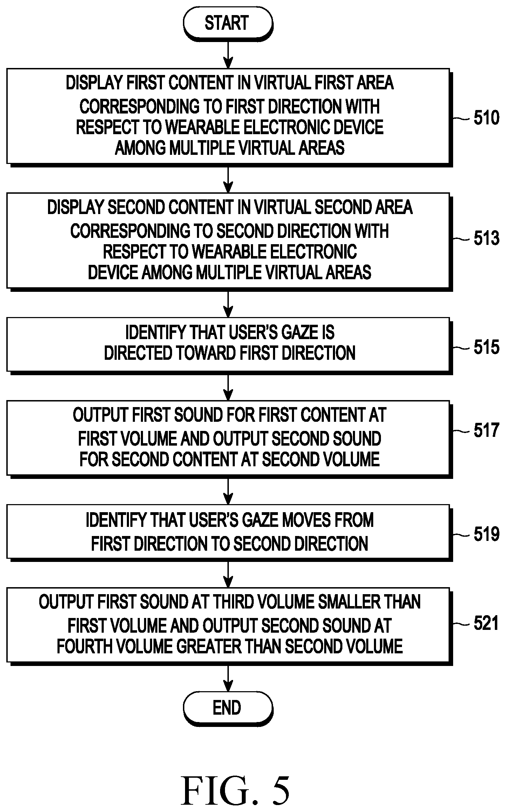

FIG. 5 is a flowchart illustrating an operation of outputting a sound for content displayed in a virtual area by a wearable electronic device according to an embodiment.

Referring to FIG. 5, according to an embodiment, in operation 510, a wearable electronic device 401 (e.g., the wearable electronic device 401 of FIG. 4) may display first content in a virtual first area corresponding to a first direction with respect to the wearable electronic device 401 among a plurality of virtual areas. For example, the plurality of virtual areas may represent areas capable of displaying content. For example, the content may include various contents stored in the wearable electronic device 401 or obtained from an external electronic device. For example, the content may include an execution screen of an application stored in the wearable electronic device 401. For example, the content may include a video or an image stored in the memory 430 (e.g., the memory 430 of FIG. 4).

According to an embodiment, in operation 513, the wearable electronic device 401 may display the second content in the second virtual area corresponding to the second direction with respect to the wearable electronic device 401 among the plurality of virtual areas through the display 401.

According to an embodiment, in operation 515, the wearable electronic device 401 may identify that the user's gaze is directed toward the first direction through the first sensor 411 (e.g., the first sensor 411 of FIG. 4).

According to an embodiment, in operation 517, the wearable electronic device 401 may output the first sound for the first content at the first volume and may output the second sound for the second content at the second volume through the speaker 450 (e.g., the speaker 450 of FIG. 4), based on identifying that the user's gaze is directed toward the first direction. According to an embodiment, the first volume may be greater than (higher than) the second volume. According to an embodiment, a position of the sound image of the first sound may correspond to the first direction, and a position of the sound image of the second sound may correspond to the second direction.

According to an embodiment, in operation 519, the wearable electronic device 401 may identify that the user's gaze moves from the first direction to the second direction through the first sensor 411.

According to an embodiment, in operation 521, the wearable electronic device 401 may output the first sound decreased from the first volume to the third volume and may output the second sound increased from the second volume to the fourth volume, based on the distance moved from the first direction to the second direction through the speaker 450. According to an embodiment, the wearable electronic device 401 may identify the distance where the user's gaze (e.g., pupil, iris) moves from the first direction to the second direction using the first sensor 411.

According to an embodiment, as the distance moved from the first direction to the second direction increases, the difference between the first volume and the third volume may increase. According to an embodiment, as the distance moved from the first direction to the second direction increases, the difference between the second volume and the fourth volume may increase.

Accordingly, the wearable electronic device 401 according to an embodiment adjusts the output volume of the sound of the content displayed (in the virtual area corresponding to the direction in which the user's gaze is directed to) to be greater than (higher than) the output volume of the sound of the content displayed in the remaining virtual areas, thereby effectively providing an environment in which the user may concentrate on the content displayed in the virtual area corresponding to the direction in which the user's gaze is directed.

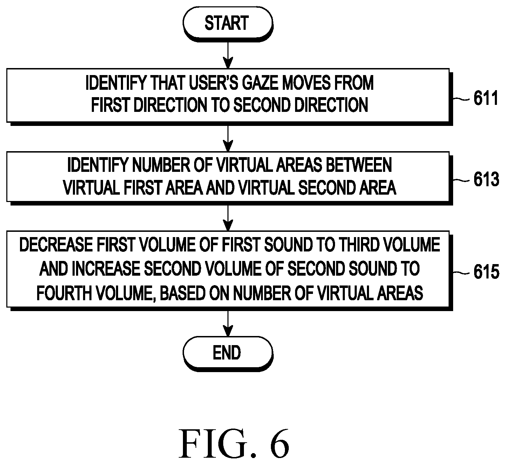

FIG. 6 is a flowchart illustrating an operation of adjusting the volume of sound for content displayed in a virtual area by a wearable electronic device according to an embodiment.

Referring to FIG. 6, according to an embodiment, in operation 611, the wearable electronic device 401 (e.g., the wearable electronic device 401 of FIG. 4) may identify that the user's gaze (e.g., iris, pupil) moves from the first direction to the second direction through the first sensor 411 (e.g., the first sensor 411 of FIG. 4).

According to an embodiment, in operation 613, the wearable electronic device 401 may identify the number of virtual areas between the virtual first area and the virtual second area. For example, the wearable electronic device 401 may identify the number of virtual areas between the virtual first area and the virtual second area using the camera.

According to an embodiment, in operation 615, the wearable electronic device 401 may decrease the first volume of the first sound to the third volume and may increase the second volume of the second sound to the fourth volume, based on the number of virtual areas between the first virtual area and the second virtual area.

According to an embodiment, a lookup table indicating the relationship between the number of virtual areas between the virtual first area corresponding to the first direction before the direction of the user's gaze moves and the virtual second area corresponding to the second direction after the direction of the user's gaze moves and the volume of sound may be stored in the memory 430. According to an embodiment, the wearable electronic device 401 may determine the output volume of the first sound corresponding to the number of virtual areas between the virtual first area and the virtual second area as the third volume and determine the output volume of the second sound as the fourth volume, using the lookup table. For example, as the number of virtual areas between the virtual first area and the virtual second area increases, the difference between the first volume and the third volume may increase, and the difference between the second volume and the fourth volume may increase.

Accordingly, when the respective horizontal lengths of the plurality of virtual areas are the same as each other, the wearable electronic device 401 according to an embodiment may determine the output volume of the sound based on the number of virtual areas between the first virtual area corresponding to the first direction before the direction of the user's gaze moves and the second virtual area corresponding to the second direction after the direction of the user's gaze moves, thereby reducing the time and resources required to calculate the output volume of the sound.

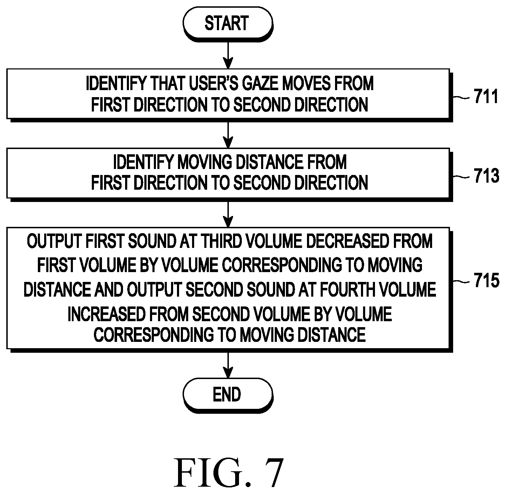

FIG. 7 is a flowchart illustrating an operation of adjusting the volume of sound for content displayed in a virtual area by a wearable electronic device according to an embodiment.

Referring to FIG. 7, according to an embodiment, in operation 711, the wearable electronic device 401 (e.g., the wearable electronic device 401 of FIG. 4) may identify that the user's gaze moves from the first direction to the second direction through the first sensor 411 (e.g., the first sensor 411 of FIG. 4).

According to an embodiment, in operation 713, the wearable electronic device 401 may identify the distance where the user's gaze (e.g., iris, pupil) moves from the first direction to the second direction.

According to an embodiment, in operation 715, the wearable electronic device 401 may output the first sound at the third volume, which is decreased by the volume corresponding to the moving distance from the first volume, and may output the second sound at the fourth volume, which is increased by the volume corresponding to the moving distance from the second volume. According to an embodiment, as the moving distance increases, the difference between the first volume and the third volume may increase. According to an embodiment, as the moving distance increases, the difference between the second volume and the fourth volume may increase.

According to an embodiment, a lookup table indicating the relationship between the distance where the user's gaze moves from the first direction to the second direction and the volume of sound may be stored in the memory 430. According to an embodiment, the wearable electronic device 401 may determine the output volume of the first sound as the third volume decreased by the volume corresponding to the distance where the user's gaze moves from the first direction to the second direction, using the lookup table stored in the memory 430. According to an embodiment, the wearable electronic device 401 may determine the output volume of the second sound to be the fourth volume, which is increased by the volume corresponding to the distance where the user's gaze moves from the first direction to the second direction, using the lookup table.

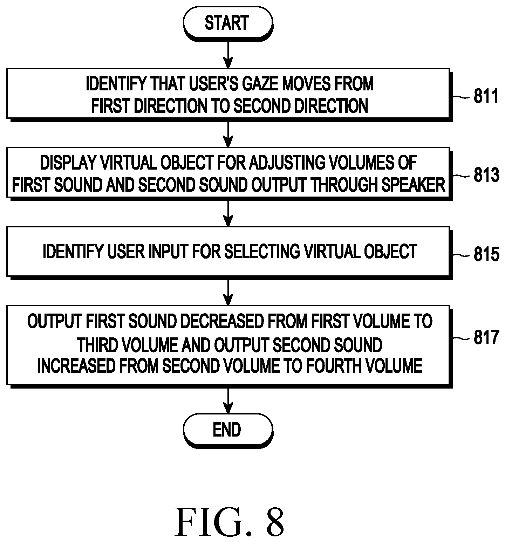

FIG. 8 is a flowchart illustrating an operation of adjusting the volume of sound for content displayed in a virtual area by a wearable electronic device according to an embodiment.

Referring to FIG. 8, according to an embodiment, in operation 811, the wearable electronic device 401 (e.g., the wearable electronic device 401 of FIG. 4) may identify that the user's gaze moves from the first direction to the second direction through the first sensor 411 (e.g., the first sensor 411 of FIG. 4).

According to an embodiment, in operation 813, the wearable electronic device 401 may display, through the display 460 (e.g., the display 460 of FIG. 4), a virtual object for adjusting the volumes of the first sound and the second sound output through the speaker 450 (e.g., the speaker 450 of FIG. 4). For example, the first sound may represent a sound output from the first content displayed in the first virtual area corresponding to the first direction. For example, the second sound may represent a sound output from the second content displayed in the second virtual area corresponding to the second direction. For example, upon identifying that the user's gaze moves from the first direction to the second direction, the wearable electronic device 401 may display the virtual object after a specified time (e.g., 2 seconds) elapses from the time point at which the movement is identified. For example, the specified time may indicate the time for determining whether the direction in which the user's gaze is directed moves. For example, since the user may move the gaze unintentionally, the specified time may be set to identify that the corresponding movement is according to the user's intention.

According to an embodiment, based on identifying that the user's gaze moves from the first direction to the second direction through the first sensor 411, the wearable electronic device 401 may identify whether the sound of the second content displayed in the virtual second area corresponding to the second direction is being output.

According to an embodiment, when the sound of the second content displayed in the second virtual area corresponding to the second direction is being output and it is identified that the sound is output at the volume of the second sound, the wearable electronic device 401 may display a virtual object for adjusting the volumes of the first sound and the second sound.

According to an embodiment, when it is identified that the sound of the second content displayed in the second virtual area corresponding to the second direction is not being output, the wearable electronic device 401 may not display the virtual object for adjusting the volumes of the first sound and the second sound.

According to an embodiment, in operation 815, the wearable electronic device 401 may identify a user input or a user gesture for selecting a virtual object. For example, the user input may include a touch input. For example, the user gesture may include a touch gesture.

According to an embodiment, in operation 817, the wearable electronic device 401 may output the first sound decreased from the first volume to the third volume and may output the second sound increased from the second volume to the fourth volume, based on identifying the user input through the speaker 450 .

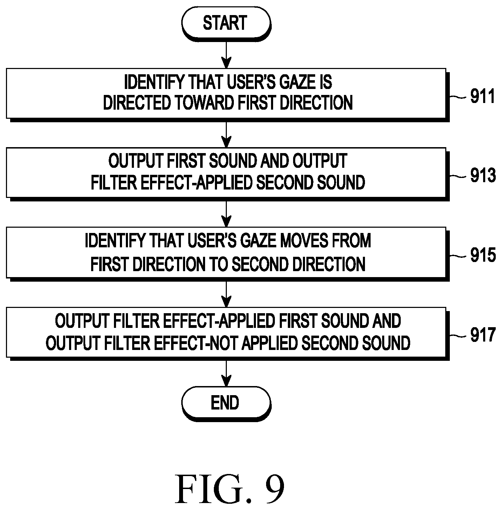

FIG. 9 is a view illustrating an operation of outputting a filter effect-applied sound by applying a filter effect to a sound for content by a wearable electronic device according to an embodiment.

Referring to FIG. 9, according to an embodiment, in operation 911, the wearable electronic device 401 (e.g., the wearable electronic device 401 of FIG. 4) may identify that the user's gaze is directed toward the first direction through the first sensor 411 (e.g., the first sensor 411 of FIG. 4).

According to an embodiment, in operation 913, the wearable electronic device 401 may output a first sound to which the filter effect is not applied, and may output a second sound to which the filter effect is applied, through the speaker 450 (e.g., the speaker 450 of FIG. 4). For example, the filter effect may include a dim effect. For example, the filter effect may include an effect of outputting or blocking a sound of a specific frequency band using at least one of a low pass filter (LPF), a high pass filter (HPF), a band pass filter (BPF), or a band reject filter (BRF).

According to an embodiment, in operation 915, the wearable electronic device 401 may identify that the user's gaze moves from the first direction to the second direction through the first sensor 411.

According to an embodiment, in operation 917, the wearable electronic device 401 may output the first sound to which the filter effect is applied, and may output the second sound to which the filter effect is not applied through the speaker 450.

Accordingly, the wearable electronic device 401 according to an embodiment may effectively provide an environment capable of concentrating on content displayed in the virtual area corresponding to the direction in which the user's gaze is directed.

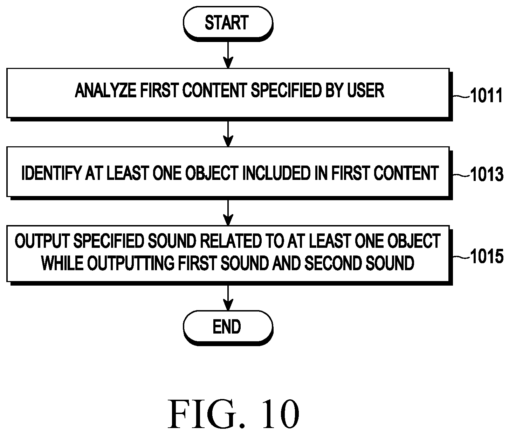

FIG. 10 is a flowchart illustrating an operation of outputting a specified sound related to an object included in content by a wearable electronic device according to an embodiment.

Referring to FIG. 10, according to an embodiment, in operation 1011, the wearable electronic device 401 (e.g., the wearable electronic device 401 of FIG. 4) may analyze the first content specified by the user. According to an embodiment, the wearable electronic device 401 may identify a user input for designating the first content displayed in the virtual first area among the plurality of virtual areas. According to an embodiment, the wearable electronic device 401 may analyze the first content using an artificial intelligence model stored in the memory 430 (e.g., the memory 430 of FIG. 4), or may analyze the first content by an external electronic device or a server. For example, the wearable electronic device 401 may analyze the content or scene of the first content.

According to an embodiment, in operation 1013, the wearable electronic device 401 may identify at least one object included in the first content. For example, when a tree, a bird, and a stream are included in the first content, the wearable electronic device 401 may determine that the corresponding content is a content indicating a forest. Alternatively or additionally, when the first content includes a planet or a space, the processor 420 may determine that the corresponding content is content representing the universe.

According to an embodiment, in operation 1015, the wearable electronic device 401 may output a specified sound related to at least one object while outputting the first sound and the second sound through the speaker 450 (e.g., the speaker 450 of FIG. 4). For example, the specified sound may be stored in the memory 430 or may be obtained from an external electronic device or a server. For example, when the first content is an image including a bird, the wearable electronic device 401 may determine the specified sound as a bird sound. For example, when the first content is an image including the sea, the wearable electronic device 401 may determine the specified sound as a wave sound. For example, when the first content is an image including a forest, the wearable electronic device 401 may determine the specified sound as a wind sound. For example, when it is identified that the first content is the content indicating the forest, the processor 420 may output a specified sound (e.g., a bird sound and/or a stream sound) related to the forest.

According to an embodiment, the position of the sound image of the specified sound may correspond to the position of the sound image of the second sound. According to an embodiment, the wearable electronic device 401 may output the specified sound based on the position of the sound image of the second sound regardless of the moving direction of the user's gaze and the moving direction of the wearable electronic device 401. For example, the specified sound may be output at a specified volume.

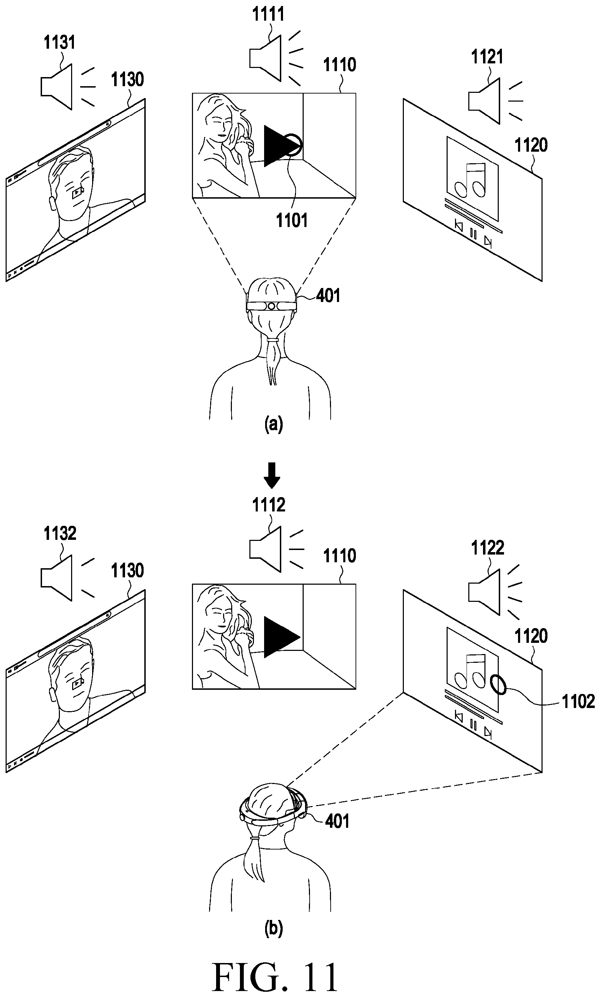

FIG. 11 is a view illustrating an operation of adjusting the volume of a sound for content displayed in a virtual area based on a moving direction of a user's gaze and/or a moving direction of a wearable electronic device, by the wearable electronic device according to an embodiment.

The sound output volumes 1111, 1112, 1121, 1122, 1131, and/or 1132 are visually illustrated for describing embodiments of the disclosure. For example, the sound output volume 1111, 1112, 1121, 1122, 1131, and/or 1132 may not be displayed on a display (e.g., the display 460 of FIG. 4). According to implementation, the wearable electronic device 401 may display a virtual object indicating the sound output volume 1111, 1112, 1121, 1122, 1131, and/or 1132 through the display (e.g., the display 460 of FIG. 4). For example, the corresponding object may be displayed near the related content (e.g., inside or outside the screen of the content). Further, the corresponding object may include information indicating a volume.

Directions 1101 and 1102 in which the user's gaze is directed are visually illustrated to explain embodiments of the disclosure. For example, the directions 1101 and 1102 in which the user's gaze is directed may not be displayed on the display (e.g., the display 460 of FIG. 4). According to implementation, the wearable electronic device 401 may display, through the display (e.g., the display 460 of FIG. 4), virtual objects indicating directions 1101 and 1102 in which the user's gaze is directed. For example, the corresponding object may be displayed near the related content (e.g., inside or outside the screen of the content).

Referring to (a) of FIG. 11, according to an embodiment, the wearable electronic device 401 (e.g., the wearable electronic device 401 of FIG. 4) may display, through the display 460 (e.g., the display 460 of FIG. 4), first content in a virtual first area 1110 corresponding to a first direction with respect to the wearable electronic device 401 among a plurality of virtual areas, second content in a virtual second area 1120 corresponding to a second direction with respect to the wearable electronic device 401, and third content in a virtual third content corresponding to a third direction with respect to the wearable electronic device 401. For example, the first content may include a playback screen of a movie stored in the wearable electronic device 401. For example, the second content may include an execution screen of a music application of the wearable electronic device 401. For example, the third content may include an execution screen of a video application of the wearable electronic device 401.

According to an embodiment, the wearable electronic device 401 may identify that the gaze of the user wearing the wearable electronic device 401 is directed toward the first direction through the first sensor 411 (e.g., the first sensor 411 of FIG. 4).

According to an embodiment, the wearable electronic device 401 may determine the output volume of the first sound for the first content to be a first volume 1111, may determine the output volume of the second sound for the second content to be a second volume 1121, and may determine the output volume of the third sound for the third content to be a third volume 1131.

For example, the first volume 1111, the second volume 1121, and the third volume 1131 of the first sound may be predetermined by the user. In this case, the second volume 1121 and the third volume 1131 may be smaller than (i.e., quieter than or lower than) the first volume 1111.

For example, the first volume 1111 of the first sound may be predetermined by the user, the second volume 1121 may be determined based on the distance between the virtual first area 1110 and the virtual second area 1120, and the third volume 1131 may be determined based on the distance between the virtual first area 1110 and the virtual third area 1130. In this case, the second volume 1121 and the third volume 1131 may be smaller than the first volume 1111.

According to an embodiment, the wearable electronic device 401 may determine the output volume of the second sound, based on the distance between the virtual first area 1110 and the virtual second area 1120. For example, the wearable electronic device 401 may identify the distance between the center position of the virtual first area 1110 and the center position of the virtual second area 1120 as the first distance between the virtual first area 1110 and the virtual second area 1120. According to an embodiment, the wearable electronic device 401 may determine, as the output volume of the second sound, the second volume decreased by the volume of the sound corresponding to the distance between the virtual first area 1110 and the virtual second area 1120 at the first volume.

According to an embodiment, the wearable electronic device 401 may determine the output volume of the third sound, based on the distance between the virtual first area 1110 and the virtual third area 1130. For example, the wearable electronic device 401 may determine, as the volume of the third sound, a third volume smaller than the first volume by the volume of the sound corresponding to the distance between the virtual first area 1110 and the virtual third area 1130.

According to an embodiment, the wearable electronic device 401 may output the second sound for the second content at the second volume 1121 and may output the third sound for the third content at the third volume 1131. For example, because the distance between the virtual first area 1110 and the virtual third area 1130 is the same as the distance between the virtual first area 1110 and the virtual second area 1120, the second volume 1121 and the third volume 1131 may be the same as each other.

In an embodiment, the distance between the virtual first area 1110 and the virtual second area 1120 is the same as the distance between the virtual first area 1110 and the virtual third area 1130. Even when the distance between the virtual first area 1110 and the virtual second area 1120 is different from the distance between the virtual first area 1110 and the virtual third area 1130, the description of the operation of determining the volume of the sound may be equally applied.

According to an embodiment, the wearable electronic device 401 may determine the volume of the second sound, based on the number of virtual areas between the virtual first area 1110 and the virtual second area 1120. For example, the wearable electronic device 401 may determine the output volume of the second sound to be a second volume smaller than the first volume by the volume corresponding to the case where the number of virtual areas is 0.

According to an embodiment, the wearable electronic device 401 may determine the volume of the third sound, based on the number of virtual areas between the virtual first area 1110 and the virtual third area 1130. For example, the wearable electronic device 401 may determine the output volume of the third sound to be a third volume smaller than the first volume by the volume corresponding to the case where the number of virtual areas is 0.

Accordingly, according to an embodiment, since the wearable electronic device 401 outputs the sound for content (positioned in the direction in which the user's gaze is directed) to be greater than (higher than) the sound for other content, the wearable electronic device 401 may provide an environment in which the user may concentrate on the content positioned in the direction in which the user's gaze is directed.

Referring to (b) of FIG. 11, according to an embodiment, the wearable electronic device 401 may identify that the gaze of the user wearing the wearable electronic device 401 moves from the first direction to the second direction through the first sensor 411.

According to an embodiment, the wearable electronic device 401 may identify the distance where the user's gaze moves from the first direction to the second direction. According to an embodiment, the wearable electronic device 401 may determine the output volume of the second sound to be the fourth volume 1122, may determine the output volume of the first sound to be the fifth volume 1112, and may determine the output volume of the third sound to be the sixth volume 1132, based on the distance where the user's gaze moves from the first direction to the second direction.

For example, the wearable electronic device 401 may determine the output volume of the second sound to be the fourth volume 1122 increased from the second volume 1121 by the volume corresponding to the moving distance from the first direction to the second direction. The wearable electronic device 401 may determine the output volume of the first sound to be a fifth volume 1112 decreased from the first volume 1111 by a volume corresponding to the moving distance from the first direction to the second direction. The wearable electronic device 401 may determine the output volume of the third sound to be a sixth volume 1132 decreased from the third volume 1131 by a volume corresponding to the moving distance from the first direction to the second direction.

For example, based on the number of virtual areas between the virtual first area 1110 and the virtual second area 1120 being 0, the wearable electronic device 401 may determine the output volume of the second sound to be the fourth volume 1122 increased from the second volume 1121 by the volume corresponding to the case where the number of virtual areas is 0. The wearable electronic device 401 may determine the output volume of the first sound to be the fifth volume 1112 decreased from the first volume 1111 by the volume corresponding to the case where the number of virtual areas is 0. Based on the number of virtual areas being 1 between the virtual third area 1130 and the virtual second area 1120, the wearable electronic device 401 may determine the output volume of the third sound to be the sixth volume 1132 decreased from the third volume 1131 by the volume corresponding to the case where the number of virtual areas is 1.

Further, according to an embodiment, the description made with reference to (a) and (b) of FIG. 11 may be equally applied when the direction in which the wearable electronic device 401 is directed matches the direction in which the user's gaze is directed. For example, referring to (a) of FIG. 11, the wearable electronic device 401 may identify that the direction in which the user's gaze and the wearable electronic device 401 are directed is the first direction. According to an embodiment, the wearable electronic device 401 may output the second sound for the second content at the second volume 1121 and may output the third sound for the third content at the third volume 1131. For example, referring to (b) of FIG. 11, the wearable electronic device 401 may identify that the user's gaze and the wearable electronic device 401 move from the first direction to the second direction. According to an embodiment, the wearable electronic device 401 may determine the output volume of the second sound to be the fourth volume 1122, may determine the output volume of the first sound to be the fifth volume 1112, and may determine the output volume of the third sound to be the sixth volume 1132.

Further, according to an embodiment, in the description made with (a) and (b) of FIG. 11, the description of the direction in which the user's gaze is directed may be replaced with the description of the direction in which the wearable electronic device 401 is directed. For example, referring to (a) of FIG. 11, the wearable electronic device 401 may identify that the direction in which the wearable electronic device 401 is directed is the first direction. According to an embodiment, the wearable electronic device 401 may output the second sound for the second content at the second volume 1121 and may output the third sound for the third content at the third volume 1131. For example, referring to (b) of FIG. 11, the wearable electronic device 401 may identify that the wearable electronic device 401 move from the first direction to the second direction. According to an embodiment, the wearable electronic device 401 may determine the output volume of the second sound to be the fourth volume 1122, may determine the output volume of the first sound to be the fifth volume 1112, and may determine the output volume of the third sound to be the sixth volume 1132.

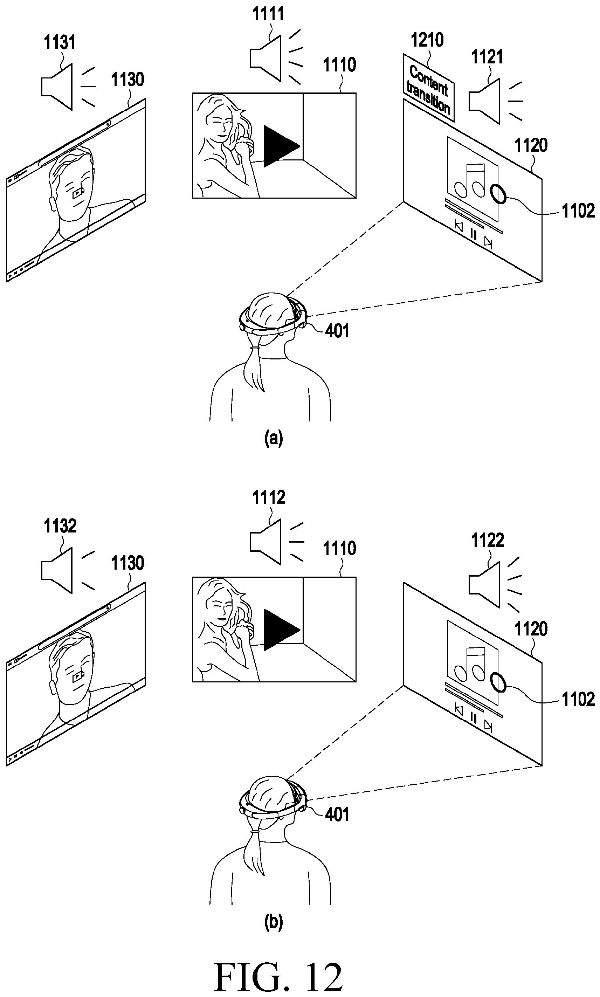

FIG. 12 illustrates an operation of displaying a virtual object for adjusting the volume of a sound for content displayed in a virtual area by a wearable electronic device according to an embodiment.

The sound output volume 1111, 1112, 1121, 1122, 1131, and/or 1132 is visually illustrated to explain embodiments of the disclosure. For example, the sound output volume 1111, 1112, 1121, 1122, 1131, and/or 1132 may not be displayed on a display (e.g., the display 460 of FIG. 4). According to implementation, the wearable electronic device 401 may display a virtual object indicating the sound output volume 1111, 1112, 1121, 1122, 1131, and/or 1132 through the display (e.g., the display 460 of FIG. 4). For example, the corresponding object may be displayed near the related content (e.g., inside or outside the screen of the content). Further, the corresponding object may include information indicating a volume.

A direction 1102 in which the user's gaze is directed is visually illustrated to describe embodiments of the disclosure. For example, the direction 1102 in which the user's gaze is directed may not be displayed on the display (e.g., the display 460 of FIG. 4). According to implementation, the wearable electronic device 401 may display, through the display (e.g., the display 460 of FIG. 4), virtual objects indicating the direction 1102 in which the user's gaze is directed. For example, the corresponding object may be displayed near the related content (e.g., inside or outside the screen of the content).

Referring to (a) of FIG. 12, according to an embodiment, in the wearable electronic device 401 (e.g., the wearable electronic device 401 of FIG. 4), while the first sound for the first content is output at the first volume 1111 (e.g., the first volume 1111 of FIG. 11), the second sound for the second content is output at the second volume 1121 (e.g., the second volume 1121 of FIG. 11), and the third sound for the third content is output at the third volume 1131 (e.g., the third volume 1131 of FIG. 11), the wearable electronic device 401 may identify that the gaze of the user wearing the wearable electronic device 401 moves from the first direction to the second direction through the first sensor 411 (e.g., the first sensor 411 of FIG. 4).

According to an embodiment, the wearable electronic device 401 may display a virtual object 1210 for adjusting the output volume 1111 of the first sound, the output volume 1121 of the second sound, and the output volume 1131 of the third sound a specified time (e.g., 2 seconds) after a time point at which it is identified that the user's gaze moves from the first direction to the second direction. For example, the wearable electronic device 401 may display the virtual object 1210 around the virtual second area 1120 in the second direction in which the user's gaze is directed.

According to an embodiment, the wearable electronic device 401 may identify a user input or a user gesture for selecting the virtual object 1210. For example, the user input or the user gesture may include a touch input or a touch gesture.

Referring to (b) of FIG. 12, according to an embodiment, the wearable electronic device 401 may output the second sound at the fourth volume 1122, may output the output volume of the first sound at the fifth volume 1112, and may output the output volume of the third sound at the sixth volume 1132, based on identifying a user input or a user gesture for selecting the virtual object 1210.

Alternatively or additionally, according to an embodiment, the wearable electronic device 401 may display the virtual object 1210 only when the user's gaze matches the direction in which the wearable electronic device 401 is directed.

Alternatively or additionally, according to an embodiment, the wearable electronic device 401 may display the virtual object 1210 based on the direction in which the wearable electronic device 401 is directed, regardless of the direction of the user's gaze.

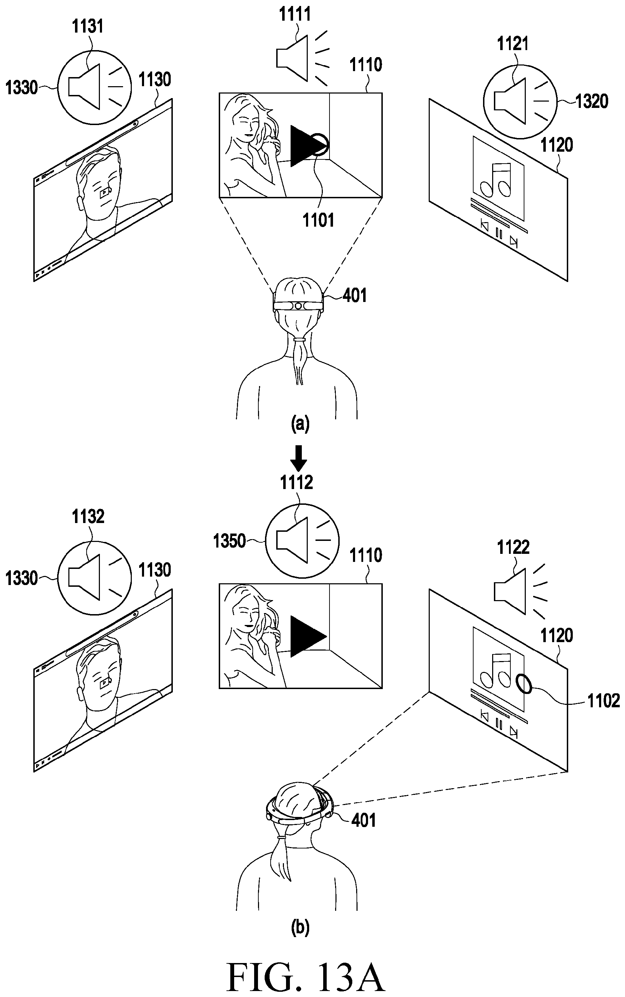

FIG. 13A is a view illustrating an operation of outputting a filter effect-applied sound by applying a filter effect to a sound for content by a wearable electronic device according to an embodiment.

The filter effect 1320 and/or 1330 applied to the sound and the sound output volume 1111, 1121, and/or 1131 are visually illustrated to describe embodiments of the disclosure. For example, the sound output volume 1111, 1121, and/or 1131 may not be displayed on a display (e.g., the display 460 of FIG. 4). According to implementation, the wearable electronic device 401 may display a virtual object indicating the sound output volume 1111, 1121, and/or 1131 through the display (e.g., the display 460 of FIG. 4). For example, the corresponding object may be displayed near the related content (e.g., inside or outside the screen of the content). Further, the corresponding object may include information indicating a volume. For example, the filter effect 1320 and/or 1330 applied to the sound is illustrated to describe embodiments of the disclosure, and may not be displayed on a display (e.g., the display 460 of FIG. 4). According to implementation, the wearable electronic device 401 may display a virtual object indicating the filter effect 1320 and/or 1330 applied to the sound through the display (e.g., the display 460 of FIG. 4). For example, the corresponding object may be displayed near the related content (e.g., inside or outside the screen of the content).

Directions 1101 and 1102 in which the user's gaze is directed are visually illustrated to describe embodiments of the disclosure. For example, the directions 1101 and 1102 (in which the user's gaze is directed are) may not be displayed on the display (e.g., the display 460 of FIG. 4). According to implementation, the wearable electronic device 401 may display, through the display (e.g., the display 460 of FIG. 4), virtual objects indicating directions 1101 and 1102 in which the user's gaze is directed. For example, the corresponding object may be displayed near the related content (e.g., inside or outside the screen of the content).

Referring to (a) of FIG. 13A, according to an embodiment, the wearable electronic device 401 (e.g., the wearable electronic device 401 of FIG. 4) may identify that the gaze of the user wearing the wearable electronic device 401 is directed toward the first direction through the first sensor 411 (e.g., the first sensor 411 of FIG. 4).

According to an embodiment, the wearable electronic device 401 may apply the filter effect 1320 to the second sound for the second content displayed in the virtual second area 1120 and the virtual third area 1130 corresponding to the direction in which the user's gaze is not directed, and may apply the filter effect 1330 to the third sound for the third content. According to an embodiment, the wearable electronic device 401 may not apply the filter effect to the first sound for the first content displayed in the virtual first area 1110. For example, the filter effects 1320 and 1330 may include an effect of dimming a sound. For example, the filter effects 1320 and 1330 may include an effect of outputting or blocking a sound of a specific frequency band using at least one of a low pass filter (LPF), a high pass filter (HPF), a band pass filter (BPF), or a band reject filter (BRF).

According to an embodiment, the wearable electronic device 401 may output the first sound to which the filter effect is not applied at the first volume 1111, may output the second sound to which the filter effect 1320 is applied at the second volume 1121, and may output the third sound to which the filter effect 1330 is applied at the third volume 1131. For example, the filter effect 1320 applied to the second sound and the filter effect 1330 applied to the third sound may be the same or different from each other.

Referring to (b) of FIG. 13A, according to an embodiment, the wearable electronic device 401 may identify that the gaze of the user wearing the wearable electronic device 401 moves from the first direction to the second direction through the first sensor 411.

According to an embodiment, the wearable electronic device 401 may not apply the filter effect 1330 to the third sound. According to an embodiment, the wearable electronic device 401 may apply the filter effect 1350 to the first sound. According to an embodiment, the wearable electronic device 401 may maintain the filter effect 1330 of the third sound.

According to an embodiment, the wearable electronic device 401 may output the first sound to which the filter effect 1350 is applied at the fifth volume 1112, may output the second sound to which the filter effect is not applied at the fourth volume 1122, and may output the third sound to which the filter effect 1330 is applied at the sixth volume 1132.

Further, according to an embodiment, the wearable electronic device 401 may apply the filter effect to the sound for content displayed in the virtual area corresponding to the direction in which the wearable electronic device 401 is not directed.

Further, according to an embodiment, when the directions in which the wearable electronic device 401 and the user's gaze are directed, the wearable electronic device 401 may not apply the filter to the sound for content displayed in the virtual area corresponding to the corresponding direction. In this case, the wearable electronic device 401 may apply the filter to the sound for content displayed in the virtual area corresponding to the remaining direction.

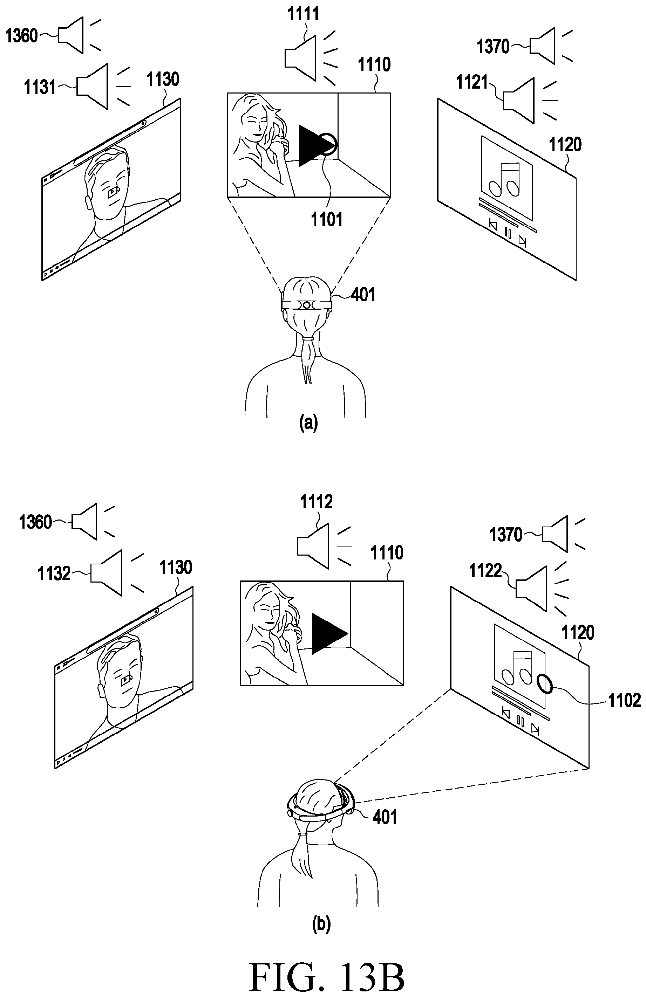

FIG. 13B is a view illustrating an operation of outputting a specified sound related to an object included in specified content by a wearable electronic device according to an embodiment.

The sound output volume 1111, 1121, and/or 1131 and the output volume 1360 and/or 1370 of the specified sound related to at least one object included in the first content are visually illustrated to describe embodiments of the disclosure. For example, the sound output volume 1111, 1121, and/or 1131 and the output volume 1360 and/or 1370 of the specified sound may not be displayed on a display (e.g., the display 460 of FIG. 4). According to implementation, the wearable electronic device 401 may display a virtual object indicating the sound output volume 1111, 1121, and/or 1131 and the output volume 1360 and/or 1370 of the specified sound through the display (e.g., the display 460 of FIG. 4). For example, the corresponding objects may be displayed near the related content (e.g., inside or outside the screen of the content). Further, the corresponding object may include information indicating a volume.

Directions 1101 and 1102 in which the user's gaze is directed are visually illustrated to describe embodiments of the disclosure. For example, the directions 1101 and 1102 (in which the user's gaze is directed to) may not be displayed on the display (e.g., the display 460 of FIG. 4). According to implementation, the wearable electronic device 401 may display, through the display (e.g., the display 460 of FIG. 4), virtual objects indicating directions 1101 and 1102 in which the user's gaze is directed. For example, the corresponding object may be displayed near the related content (e.g., inside or outside the screen of the content).

Referring to (a) of FIG. 13B, according to an embodiment, the wearable electronic device 401 (e.g., the wearable electronic device 401 of FIG. 4) may analyze the first content specified by the user. For example, the wearable electronic device 401 may obtain a user input for the first content for outputting specified sounds 1360 and 1370 related to at least one object included in the first content.

According to an embodiment, the wearable electronic device 401 may identify at least one object included in the first content by analyzing the first content. According to an embodiment, the wearable electronic device 401 may identify at least one object included in the first content using the artificial intelligence model stored in the memory 430 (e.g., the memory 430 of FIG. 4), or may identify at least one object by an external electronic device or a server.

According to an embodiment, the wearable electronic device 401 may output the specified sound related to at least one object at the specified volumes 1360 and 1370 while outputting the first sound at the first volume 1111, the second sound at the second volume 1121, and the third sound at the third volume 1131 through the speaker 450 (e.g., the speaker 450 of FIG. 4). For example, the specified sound may be stored in the memory 430 or may be obtained from an external electronic device or a server. For example, when the first content is an image including a bird, the wearable electronic device 401 may determine the specified sound as a bird sound. For example, when the first content is an image including the sea, the wearable electronic device 401 may determine the specified sound as a wave sound. For example, when the first content is an image including a forest, the wearable electronic device 401 may determine the specified sound as a wind sound.

According to an embodiment, the position of the sound image of the specified sound may correspond to the position of the sound image of the second sound and the position of the sound image of the third sound. According to an embodiment, the wearable electronic device 401 may output a specified sound through the speaker 450, based on the position of the sound image of the second sound. Further, according to an embodiment, the wearable electronic device 401 may output the specified sound through the speaker 450 based on the position of the sound image of the third sound.

Referring to (b) of FIG. 13B, according to an embodiment, the wearable electronic device 401 may identify that the user's gaze and/or the wearable electronic device 401 moves from the first direction to the second direction. According to an embodiment, the wearable electronic device 401 may output specified sounds 1360 and 1370 related to at least one object included in the first content at a specified volume, regardless of the direction in which the wearable electronic device 401 is directed and the direction in which the user's gaze is directed. In this case, the positions of the sound images of the specified sounds 1360 and 1370 may correspond to the position of the sound image of the second sound 1121 and the position of the sound image of the third sound 1131.

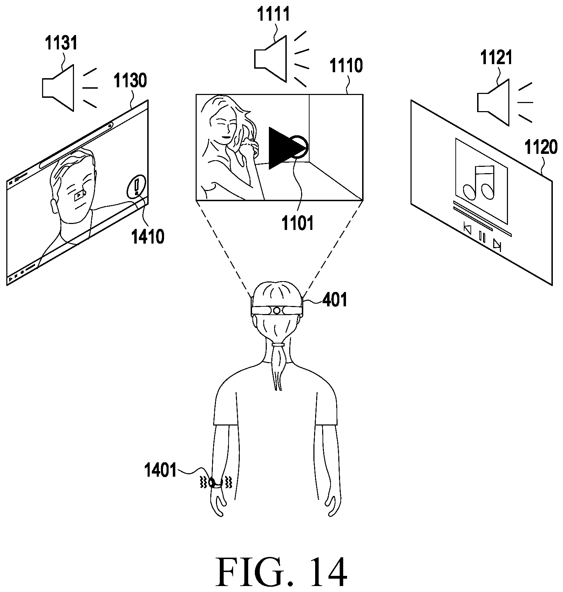

FIG. 14 illustrates an operation of transmitting notification information to a communicatively connected first wearable electronic device by a wearable electronic device according to an embodiment.

Referring to FIG. 14, according to an embodiment, the wearable electronic device 401 (e.g., the wearable electronic device 401 of FIG. 4) may identify that the wearable electronic device 401 and the first wearable electronic device 1401 are worn on the user's body. According to an embodiment, the first wearable electronic device 1401 may include a wearable electronic device wearable on a wrist.

According to an embodiment, the wearable electronic device 401 may identify that the first wearable electronic device 1401 is worn on the user's left wrist. For example, the wearable electronic device 401 may display, through the display 460 (e.g., the display 460 of FIG. 4), a user interface for selecting the body part on which the first wearable electronic device 1401 is worn. The wearable electronic device 401 may identify a user input indicating that the first wearable electronic device 1401 is worn on the left wrist through the user interface. The wearable electronic device 401 may identify that the first wearable electronic device 1401 is worn on the user's left wrist, based on a user input.

According to an embodiment, the wearable electronic device 401 may identify notification information 1410 about the third content displayed in the virtual third area 1130 corresponding to the third direction in a state in which the user's gaze is directed toward the first direction and/or the wearable electronic device 401 is directed toward the first direction. In this case, the third direction may indicate a left direction with respect to the user's gaze. For example, the third content may include an execution screen of a video application of the wearable electronic device 401. The notification information may include information indicating that the currently played video is terminated or information indicating that a new video is played. For example, the third content may further include an execution screen of a text application of the wearable electronic device 401. The notification information may include information indicating that the message is obtained from the external electronic device. However, this is an example, and the notification information and the third content may not be limited to the above example.

According to an embodiment, the wearable electronic device 401 may transmit notification information about the third content to the first wearable electronic device 1401. According to an embodiment, the first wearable electronic device 1401 may output notification information about the third content as vibration or voice.

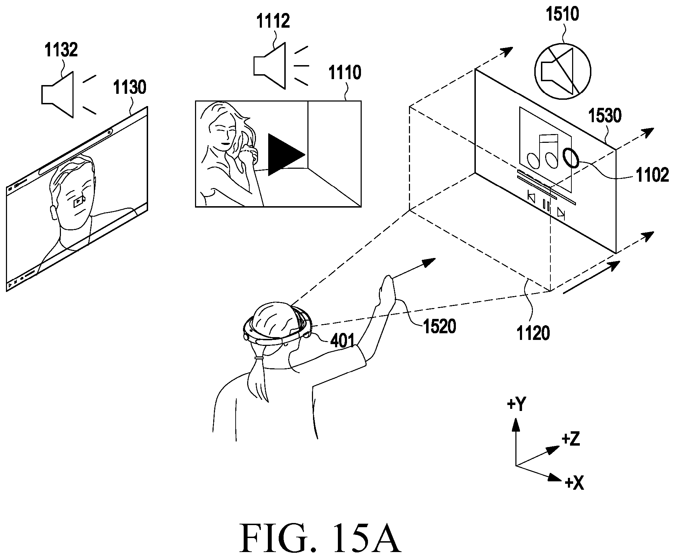

FIG. 15A illustrates an operation of adjusting the output volume of sound by adjusting the position of a virtual area by a wearable electronic device according to an embodiment.

Referring to FIG. 15A, according to an embodiment, the wearable electronic device 401 (e.g., the wearable electronic device 401 of FIG. 4) may output the second sound for the second content displayed in the virtual second area 1120 (e.g., 1120 of FIG. 11) corresponding to the second direction at the fourth volume 1122 (e.g., 1122 of FIG. 11) in a state in which the direction of the user's gaze and/or the direction of the wearable electronic device 401 is the second direction.

In this case, the wearable electronic device 401 may identify a user gesture 1520 for adjusting the position of the virtual second area 1120 corresponding to the second direction. For example, the user gesture 1520 may include a gesture of moving the palm in the +Z-axis direction with the palm directed toward the +Z-axis direction.

According to an embodiment, the wearable electronic device 401 may identify the first distance where the palm is moved, based on identifying the user gesture 1520. According to an embodiment, the wearable electronic device 401 may move the virtual second area 1120 to a position corresponding to the first distance where the palm is moved.

According to an embodiment, the wearable electronic device 401 may display the second content on the virtual second area 1530 displayed at the position corresponding to the distance where the palm is moved.

According to an embodiment, the wearable electronic device 401 may change the output volume of the second sound from the fourth volume 1122 to the mute 1510, based on identifying the user gesture 1520.

According to an embodiment, after the output volume of the second sound is changed to the mute 1510, the wearable electronic device 401 may identify an additional user gesture for adjusting the position of the virtual second area 1530. For example, the additional user gesture may represent a gesture of moving the palm in the +Z-axis direction for a specific time.

According to an embodiment, when the additional user gesture is identified, the wearable electronic device 401 may increase the mute 1510 of the second sound to the fourth volume 1122. According to an embodiment, based on identifying the user gesture 1520, the wearable electronic device 401 may decrease the output volume of the second sound from the fourth volume 1122 by the volume corresponding to the first distance where the palm is moved.

According to an embodiment, the wearable electronic device 401 may determine the output volume of the second sound, based on the position of the virtual second area 1530, based on identifying the user gesture 1520. For example, the wearable electronic device 401 may determine the second sound decreased by the volume corresponding to the distance between the virtual first area 1110 (e.g., the virtual first area 1110 of FIG. 11) corresponding to the first direction in which the user's gaze and the wearable electronic device 401 are directed and the repositioned virtual second area 1530, based on the distance.

According to an embodiment, the wearable electronic device 401 may identify an additional user gesture for adjusting the position of the virtual second area 1530 after decreasing the output volume of the second sound from the fourth volume 1122 by the volume corresponding to the first distance where the palm is moved. For example, the additional user gesture may represent a gesture of moving the palm in the +Z-axis direction for a specific time.

According to an embodiment, when the additional user gesture is identified, the wearable electronic device 401 may increase the decreased volume of the second sound by the volume of the sound corresponding to the specific time. According to an embodiment, when the additional user gesture is identified, the wearable electronic device 401 may increase the decreased volume of the second sound by the volume of the sound corresponding to the second distance where the palm is moved based on the additional user gesture.

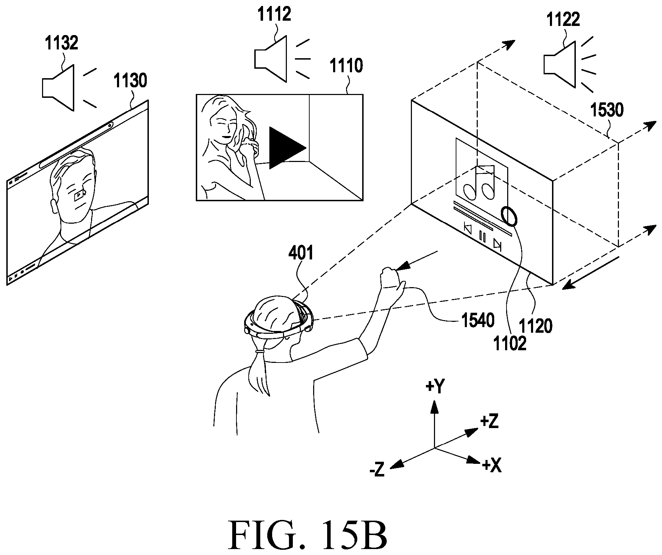

FIG. 15B illustrates an operation of adjusting the output volume of sound by adjusting the position of a virtual area by a wearable electronic device according to an embodiment.

Referring to FIG. 15B, according to an embodiment, the wearable electronic device 401 (e.g., the wearable electronic device 401 of FIG. 4) may identify a user gesture 1540 for adjusting the position of the virtual second area 1530 (e.g., 1530 of FIG. 15A) corresponding to the second direction. For example, the user gesture 1540 may include a gesture of moving the palm in the -Z-axis direction with the palm directed toward the -Z-axis direction.

According to an embodiment, the wearable electronic device 401 may identify the first distance where the palm is moved, based on identifying the user gesture 1540. According to an embodiment, the wearable electronic device 401 may move the virtual second area 1530 to a position corresponding to the first distance where the palm is moved.

According to an embodiment, the wearable electronic device 401 may display the second content on the virtual second area 1120 displayed at the position corresponding to the first distance where the palm is moved.

According to an embodiment, the wearable electronic device 401 may change the output volume of the second sound from the mute 1510 (e.g., the mute 1510 of FIG. 15A) to the fourth volume 1122, based on identifying the user gesture 1540. For example, the fourth volume 1122 may include the output volume of the second sound before the user gesture 1520 is identified.

According to an embodiment, based on identifying the user gesture 1540, the wearable electronic device 401 may increase the volume of the second sound from the mute 1510 of the second sound by the volume corresponding to the second distance where the palm is moved.

According to an embodiment, after the output volume of the second sound is changed to the fourth volume 1122, the wearable electronic device 401 may identify an additional user gesture for adjusting the position of the virtual second area 1120. For example, the additional user gesture may represent a gesture of moving the palm in the -Z-axis direction for a specific time. For example, the additional user gesture may include a push-push type switch. However, this is an example, and the gesture may not be limited thereto. According to an embodiment, when the additional user gesture is identified, the wearable electronic device 401 may increase the fourth volume 1122 of the second sound to the mute 1510.

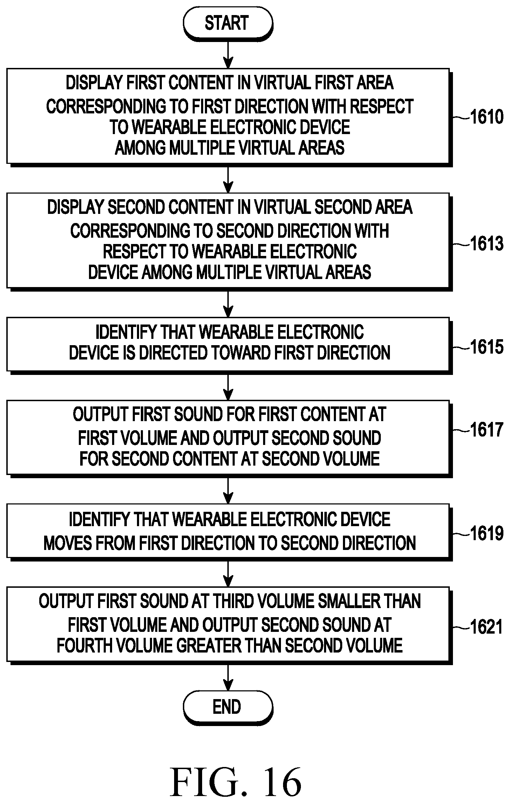

FIG. 16 illustrates an operation of outputting a sound for content displayed in a virtual area by a wearable electronic device according to an embodiment.

Referring to FIG. 16, according to an embodiment, in operation 1610, a wearable electronic device 401 (e.g., the wearable electronic device 401 of FIG. 4) may display first content in a virtual first area corresponding to a first direction with respect to the wearable electronic device among a plurality of virtual areas.

According to an embodiment, in operation 1613, the wearable electronic device 401 may display the second content in the second virtual area corresponding to the second direction with respect to the wearable electronic device 401 among the plurality of virtual areas through the display 401.

According to an embodiment, in operation 1615, the wearable electronic device 401 may identify that the wearable electronic device 401 is directed toward the first direction through the second sensor 412 (e.g., the second sensor 412 of FIG. 4). For example, the wearable electronic device 401 may identify, through the second sensor 412, that the wearable electronic device 401 is directed toward the first direction in which the first content is displayed, based on identifying the first content displayed in the specified area of the field of view (FOV) area of the wearable electronic device 401.

According to an embodiment, in operation 1617, based on identifying that the wearable electronic device 401 is directed toward the first direction, the wearable electronic device 401 may output the first sound for the first content at the first volume and may output the second sound for the second content at the second volume through the speaker 450 (e.g., the speaker 450 of FIG. 4). In an embodiment, the first volume may be greater than the second volume. In an embodiment, the second volume may be greater than the first volume.

According to an embodiment, a position of the sound image of the first sound may correspond to the first direction, and a position of the sound image of the second sound may correspond to the second direction.

According to an embodiment, in operation 1619, the wearable electronic device 401 may identify that the wearable electronic device moves from the first direction to the second direction.

According to an embodiment, in operation 1621, based on the wearable electronic device 401 moving from the first direction to the second direction, the wearable electronic device 401 may output the first sound at a third volume (e.g., smaller than (lower than) the first volume) and may output the second sound at a fourth volume (e.g., greater than (higher than) the second volume) through the speaker 450. For example, the wearable electronic device 401 may identify, through the second sensor 412, that the wearable electronic device 401 is directed toward the second direction in which the second content is displayed, based on identifying the second content displayed in the specified area of the field of view (FOV) area of the wearable electronic device 401. According to an embodiment, based on identifying that the moving direction of the user's gaze and the moving direction of the wearable electronic device 401 do not correspond to each other, the wearable electronic device 401 may maintain the output volume of the first sound as the first volume and maintain the output volume of the second sound as the second volume.

According to an embodiment, as the distance moved from the first direction to the second direction increases, the difference between the first volume and the third volume may increase. According to an embodiment, as the distance moved from the first direction to the second direction increases, the difference between the second volume and the fourth volume may increase.

According to an embodiment, the operations described when the direction of the user's gaze and the direction in which the wearable electronic device 401 is directed correspond to each other may be equally applied even when only the direction in which the wearable electronic device 401 is directed moves.

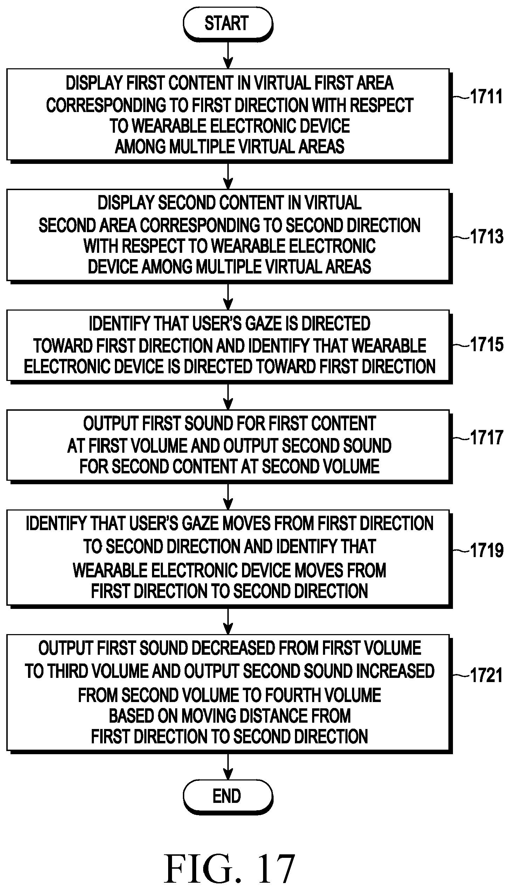

FIG. 17 illustrates an operation of outputting a sound for content displayed in a virtual area by a wearable electronic device according to an embodiment.

Referring to FIG. 17, according to an embodiment, in operation 1711, a wearable electronic device 401 (e.g., the wearable electronic device 401 of FIG. 4) may display first content in a virtual first area corresponding to a first direction with respect to the wearable electronic device among a plurality of virtual areas.

According to an embodiment, in operation 1713, the wearable electronic device 401 may display the second content in the second virtual area corresponding to the second direction with respect to the wearable electronic device 401 among the plurality of virtual areas through the display 401.

According to an embodiment, in operation 1715, the wearable electronic device 401 may identify that the user's gaze is directed toward the first direction through the first sensor 411 (e.g., the first sensor 411 of FIG. 4) and the wearable electronic device 401 is directed toward the first direction through the second sensor 412 (e.g., the second sensor 412 of FIG. 4).

According to an embodiment, in operation 1717, based on identifying that the user's gaze is directed toward the first direction and the wearable electronic device 401 is directed toward the first direction, the wearable electronic device 401 may output the first sound for the first content at the first volume and may output the second sound for the second content at the second volume through the speaker 450 (e.g., the speaker 450 of FIG. 4). In an embodiment, the first volume may be greater than the second volume. In an embodiment, the second volume may be greater than the first volume. According to an embodiment, a position of the sound image of the first sound may correspond to the first direction, and a position of the sound image of the second sound may correspond to the second direction.

According to an embodiment, in operation 1719, the wearable electronic device 401 may identify that the user's gaze moves from the first direction to the second direction through the first sensor 411, and may identify that the wearable electronic device 401 moves from the first direction to the second direction through the second sensor 412.

According to an embodiment, in operation 1721, based on the directions in which the user's gaze and the wearable electronic device 401 are directed moving from the first direction to the second direction, the wearable electronic device 401 may output the first sound at a third volume smaller than the first volume and may output the second sound at a fourth volume (e.g., greater than (higher than) the second volume) through the speaker 450.

According to an embodiment, as the distance moved from the first direction to the second direction increases, the difference between the first volume and the third volume may increase. According to an embodiment, as the distance moved from the first direction to the second direction increases, the difference between the second volume and the fourth volume may increase.

Accordingly, the wearable electronic device 401 according to an embodiment adjusts the output volume of the sound of the content displayed in the virtual area corresponding to the directions in which the user's gaze and the wearable electronic device 401 are directed to be greater than (higher than) the output volume of the sound of the content displayed in the remaining virtual areas, thereby effectively providing an environment in which the user may concentrate on the content displayed in the virtual area corresponding to the direction in which the user's gaze and the wearable electronic device 401 are directed. According to an embodiment, a wearable electronic device may comprise a first sensor, a speaker, a display, memory storing instructions, and a processor.

According to an embodiment, the instructions may, when executed by the processor, enable the wearable electronic device to display, through the display, first content in a first virtual area corresponding to a first direction with respect to the wearable electronic device among a plurality of virtual areas.

According to an embodiment, the instructions may, when executed by the processor, enable the wearable electronic device to display, through the display, second content in a second virtual area, which corresponds to a second direction with respect to the wearable electronic device, among the plurality of virtual areas.

According to an embodiment, the instructions may, when executed by the processor, enable the wearable electronic device to, based on identifying, through the first sensor, that a gaze of a user wearing the wearable electronic device is directed toward the first direction, output, through the speaker, a first sound of the first content at a first volume and a second sound of the second content at a second volume. In an embodiment, the first volume may be greater than (higher than) the second volume.

According to an embodiment, the instructions may, when executed by the processor, enable the wearable electronic device to, based on identifying, through the first sensor, that the gaze of the user moves from the first direction to the second direction, output, through the speaker, the first sound at a third volume decreased from the first volume and the second sound at a fourth volume increased from the second volume.

According to an embodiment, the instructions may, when executed by the processor, enable the wearable electronic device to determine the third volume and the fourth volume based on a number of virtual areas between the first virtual area and the second virtual area among the plurality of virtual areas.

According to an embodiment, the instructions may, when executed by the processor, enable the wearable electronic device to increase a difference between the first volume and the third volume and a difference between the second volume and the fourth volume, as the number of the virtual areas between the first virtual area and the second virtual area increases.

According to an embodiment, the instructions may, when executed by the processor, enable the wearable electronic device to determine an output volume of the first sound to be the third volume decreased from the first volume by a volume corresponding to a distance where the gaze of the user moves from the first direction to the second direction.

According to an embodiment, the instructions may, when executed by the processor, enable the wearable electronic device to determine an output volume of the second sound to be the fourth volume increased from the second volume by a volume corresponding to the distance.

According to an embodiment, the instructions may, when executed by the processor, enable the wearable electronic device to, based on identifying that the gaze of the user wearing the wearable electronic device is directed toward the first direction, apply a filter effect to the second sound, and output the second sound to which the filter effect is applied.

According to an embodiment, the instructions may, when executed by the processor, enable the wearable electronic device to, based on identifying that the gaze of the user moves from the first direction to the second direction, apply the filter effect to the first sound, and output the first sound to which the filter effect is applied and the second sound to which the filter effect is not applied.

According to an embodiment, the filter effect may include an effect of dimming the sound.

According to an embodiment, the instructions may, when executed by the processor, enable the wearable electronic device to output a specified sound related to at least one object included in the first content.

According to an embodiment, the instructions may, when executed by the processor, enable the wearable electronic device to allow a position of a sound image of the specified sound to correspond to a position of the sound image of the second sound.

According to an embodiment, the instructions may, when executed by the processor, enable the wearable electronic device to output, through the speaker, the specified sound at a specified volume regardless of a direction of a movement of the gaze of the user.

According to an embodiment, the instructions may, when executed by the processor, enable the wearable electronic device to identify a gesture of the user corresponding to a specified gesture for adjusting a position of the first virtual area in a state in which the gaze of the user is directed toward the first direction.

According to an embodiment, the instructions may, when executed by the processor, enable the wearable electronic device to, based on the adjusted position of the first virtual area, adjust an output volume of the first sound.

According to an embodiment, the instructions may, when executed by the processor, enable the wearable electronic device to identify that the gaze of the user is directed toward the first direction in a state in which the wearable electronic device is worn on a head of the user and the first wearable electronic device is worn on a right wrist of the user. The second direction may represent a right direction with respect to a direction of the gaze of the user.

According to an embodiment, the instructions may, when executed by the processor, enable the wearable electronic device to, when notification information related to the second content is obtained, transmit the notification information to the first wearable electronic device.

According to an embodiment, in the wearable electronic device, a position of a sound image of the first sound may correspond to the first direction, and a position of a sound image of the second sound may correspond to the second direction.

According to an embodiment, the wearable electronic device may further comprise a second sensor 412. The instructions may, when executed by the processor, enable the wearable electronic device to, based on identifying, through the first sensor, that the gaze of the user wearing the wearable electronic device is directed toward the first direction and identifying, through the second sensor, that the wearable electronic device is directed toward the first direction, output, through the speaker, the first sound of the first content at the first volume, and based on identifying, through the first sensor, that the gaze of the user moves from the first direction to the second direction and identifying, through the second sensor, that the wearable electronic device moves from the first direction to the second direction, output, through the speaker, the first sound at the third volume (e.g., less than (lower than) the first volume) and the second sound at the fourth volume (e.g., greater than (higher than) the second volume).

According to an embodiment, a method for operating a wearable electronic device may comprise displaying, through a display of the wearable electronic device, first content in a first virtual area corresponding to a first direction with respect to the wearable electronic device among a plurality of virtual areas.

According to an embodiment, the method for operating the wearable electronic device may comprise displaying, through the display of the wearable electronic device, second content in a second virtual area, which corresponds to a second direction with respect to the wearable electronic device, among the plurality of virtual areas.

According to an embodiment, the method for operating the wearable electronic device may comprise, based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume. In an embodiment, the first volume may be greater than (higher than) the second volume. In an embodiment, the second volume may be greater than (higher than) the first volume.

According to an embodiment, the method for operating the wearable electronic device may comprise, based on identifying, through the first sensor, that the gaze of the user moves from the first direction to the second direction, outputting, through the speaker, the first sound at a third volume decreased from the first volume and the second sound at a fourth volume increased from the second volume.

According to an embodiment, the method for operating the wearable electronic device may comprise determining the third volume and the fourth volume based on a number of virtual areas between the first virtual area and the second virtual area among the plurality of virtual areas.

According to an embodiment, in the method for operating the wearable electronic device, a difference between the first volume and the third volume, and a difference between the second volume and the fourth volume may increase as the number of the virtual areas between the first virtual area and the second virtual area increases.

According to an embodiment, the method for operating the wearable electronic device may comprise determining an output volume of the first sound to be the third volume decreased from the first volume by a volume corresponding to a distance where the gaze of the user moves from the first direction to the second direction.

According to an embodiment, the method for operating the wearable electronic device may comprise determining an output volume of the second sound to be the fourth volume increased from the second volume by a volume corresponding to the distance.

According to an embodiment, the method for operating the wearable electronic device may comprise, based on identifying that the gaze of the user wearing the wearable electronic device is directed toward the first direction, applying a filter effect to the second sound, and outputting the second sound to which the filter effect is applied.

According to an embodiment, the method for operating the wearable electronic device may comprise, based on identifying that the gaze of the user moves from the first direction to the second direction, applying the filter effect to the first sound, and outputting the first sound to which the filter effect is applied and the second sound to which the filter effect is not applied.

According to an embodiment, the method for operating the wearable electronic device may comprise outputting a specified sound related to at least one object included in the first content.

According to an embodiment, in the method for operating the wearable electronic device, a position of a sound image of the specified sound may correspond to the position of the sound image of the second sound.

According to an embodiment, the method for operating the wearable electronic device may comprise outputting the specified sound at a specified volume regardless of a direction of a movement of the gaze of the user.

According to an embodiment, the method for operating the wearable electronic device may comprise identifying a gesture of the user corresponding to a specified gesture for adjusting a position of the first virtual area in a state in which the gaze of the user is directed toward the first direction.

According to an embodiment, the method for operating the wearable electronic device may comprise adjusting the first volume based on the adjusted position of the virtual first area.

According to an embodiment, the method for operating the wearable electronic device may comprise identifying that the gaze of the user is directed toward the first direction in a state in which the wearable electronic device is worn on a head of the user and the first wearable electronic device is worn on a right wrist of the user. The second direction may represent a right direction with respect to a direction of the gaze of the user.

According to an embodiment, the method for operating the wearable electronic device may comprise, upon obtaining notification information related to the second content, transmitting the notification information to the first wearable electronic device.

According to an embodiment, the method for operating the wearable electronic device may comprise, based on identifying, through the first sensor, that the gaze of the user wearing the wearable electronic device is directed toward the first direction and identifying, through the second sensor, that the wearable electronic device is directed toward the first direction, outputting, through the speaker, the first sound of the first content at the first volume, and based on identifying, through the first sensor, that the gaze of the user moves from the first direction to the second direction and identifying, through the second sensor, that the wearable electronic device moves from the first direction to the second direction, outputting, through the speaker, the first sound at the third volume less than (lower than) the first volume and the second sound at the fourth volume, for example, greater than (higher than) the second volume.

According to an embodiment, in a storage medium storing computer-readable instructions, the instructions may, when executed by a processor of a wearable electronic device, enable the wearable electronic device to perform at least one operation. The at least one operation may comprise displaying, through a display of the wearable electronic device, first content in a first virtual area corresponding to a first direction with respect to the wearable electronic device among a plurality of virtual areas.

According to an embodiment, in a storage medium storing computer-readable instructions, the instructions may, when executed by a processor of a wearable electronic device, enable the wearable electronic device to perform at least one operation. The at least one operation may comprise displaying, through the display of the wearable electronic device, second content in a second virtual area, which corresponds to a second direction with respect to the wearable electronic device, among the plurality of virtual areas.

According to an embodiment, in a storage medium storing computer-readable instructions, the instructions may, when executed by a processor of a wearable electronic device, enable the wearable electronic device to perform at least one operation. The at least one operation may comprise, based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume. In an embodiment, the first volume may be greater than (higher than) the second volume. In an embodiment, the second volume may be greater than (higher than) the first volume.

According to an embodiment, in a storage medium storing computer-readable instructions, the instructions may, when executed by a processor of a wearable electronic device, enable the wearable electronic device to perform at least one operation. The at least one operation may comprise, based on identifying, through the first sensor, that the gaze of the user moves from the first direction to the second direction, outputting, through the speaker, the first sound at a third volume decreased from the first volume and the second sound at a fourth volume increased from the second volume. An output volume of the first sound may be decreased based on the moving distance from the first direction to the second direction, and an output volume of the second sound may be increased based on the moving distance from the first direction to the second direction.

According to an embodiment, in a storage medium storing computer-readable instructions, the instructions may, when executed by a processor of a wearable electronic device, enable the wearable electronic device to perform at least one operation. The at least one operation may comprise determining the third volume and the fourth volume based on a number of virtual areas between the first virtual area and the second virtual area among the plurality of virtual areas.

According to an embodiment, in a storage medium storing computer-readable instructions, a difference between the first volume and the third volume, and a difference between the second volume and the fourth volume may increase as the number of the virtual areas between the first virtual area and the second virtual area increases.

According to an embodiment, in a storage medium storing computer-readable instructions, the instructions may, when executed by a processor of a wearable electronic device, enable the wearable electronic device to perform at least one operation. The at least one operation may comprise determining an output volume of the first sound to be the third volume decreased from the first volume by a volume corresponding to a distance where the gaze of the user moves from the first direction to the second direction.

According to an embodiment, in a storage medium storing computer-readable instructions, the instructions may, when executed by a processor of a wearable electronic device, enable the wearable electronic device to perform at least one operation. The at least one operation may comprise determining an output volume of the second sound to be the fourth volume increased from the second volume by a volume corresponding to the distance.

According to an embodiment, in a storage medium storing computer-readable instructions, the instructions may, when executed by a processor of a wearable electronic device, enable the wearable electronic device to perform at least one operation. The at least one operation may comprise, based on identifying that the gaze of the user wearing the wearable electronic device is directed toward the first direction, applying a filter effect to the second sound, and output the second sound to which the filter effect is applied.

According to an embodiment, in a storage medium storing computer-readable instructions, the instructions may, when executed by a processor of a wearable electronic device, enable the wearable electronic device to perform at least one operation. The at least one operation may comprise, based on identifying that the gaze of the user moves from the first direction to the second direction, applying the filter effect to the first sound, and output the first sound to which the filter effect is applied and the second sound to which the filter effect is not applied.

According to an embodiment, in a storage medium storing computer-readable instructions, the instructions may, when executed by a processor of a wearable electronic device, enable the wearable electronic device to perform at least one operation. The at least one operation may comprise outputting a specified sound related to at least one object included in the first content.

According to an embodiment, in a storage medium storing computer-readable instruction, a position of a sound image of the specified sound may correspond to the position of the sound image of the second sound.

According to an embodiment, in a storage medium storing computer-readable instructions, the instructions may, when executed by a processor of a wearable electronic device, enable the wearable electronic device to perform at least one operation. The at least one operation may comprise outputting, through the speaker, the specified sound at a specified volume regardless of a direction of a movement of the gaze of the user.

According to an embodiment, in a storage medium storing computer-readable instructions, the instructions may, when executed by a processor of a wearable electronic device, enable the wearable electronic device to perform at least one operation. The at least one operation may comprise identifying a gesture of the user corresponding to a specified gesture for adjusting a position of the first virtual area in a state in which the gaze of the user is directed toward the first direction.

According to an embodiment, in a storage medium storing computer-readable instructions, the instructions may, when executed by a processor of a wearable electronic device, enable the wearable electronic device to perform at least one operation. The at least one operation may comprise, based on the adjusted position of the first virtual area, adjusting an output volume of the first sound.

According to an embodiment, in a storage medium storing computer-readable instructions, the instructions may, when executed by a processor of a wearable electronic device, enable the wearable electronic device to perform at least one operation. The at least one operation may comprise identifying that the gaze of the user is directed toward the first direction in a state in which the wearable electronic device is worn on a head of the user and the first wearable electronic device is worn on a right wrist of the user. The second direction may represent a right direction with respect to a direction of the gaze of the user.

According to an embodiment, in a storage medium storing computer-readable instructions, the instructions may, when executed by a processor of a wearable electronic device, enable the wearable electronic device to perform at least one operation. The at least one operation may comprise, when notification information related to the second content is obtained, transmitting the notification information to the first wearable electronic device.

According to an embodiment, in a storage medium storing computer-readable instructions, the instructions may, when executed by a processor of a wearable electronic device, enable the wearable electronic device to perform at least one operation. The at least one operation may comprise, based on identifying, through the first sensor, that the gaze of the user wearing the wearable electronic device is directed toward the first direction and identifying, through the second sensor, that the wearable electronic device is directed toward the first direction, outputting, through the speaker, the first sound of the first content at the first volume, and based on identifying, through the first sensor, that the gaze of the user moves from the first direction to the second direction and identifying, through the second sensor, that the wearable electronic device moves from the first direction to the second direction, outputting, through the speaker, the first sound at the third volume (e.g., less than (lower than) the first volume) and the second sound at the fourth volume (e.g. greater than (higher than) the second volume).

According to an embodiment, a wearable electronic device may comprise a first sensor, a speaker, a display, memory storing instructions, and a processor. According to an embodiment, the instructions may, when executed by the processor, enable the wearable electronic device to display, through the display, first content in a first virtual area corresponding to a first direction with respect to the wearable electronic device among a plurality of virtual areas. According to an embodiment, the instructions may, when executed by the processor, enable the wearable electronic device to display, through the display, second content in a second virtual area, which corresponds to a second direction with respect to the wearable electronic device, among the plurality of virtual areas. According to an embodiment, the instructions may, when executed by the processor, enable the wearable electronic device to, based on identifying, through the sensor, that the wearable electronic device is directed toward the first direction, output, through the speaker, a first sound of the first content at a first volume and a second sound of the second content at a second volume. In an embodiment, the first volume may be greater than (higher than) the second volume, and a position of a sound image of the first sound may correspond to the first direction, and a position of a sound image of the second sound may correspond to the second direction. According to an embodiment, the instructions may, when executed by the processor, enable the wearable electronic device to, based on identifying, through the sensor, that the wearable electronic device moves from the first direction to the second direction, output, through the speaker, the first sound at a third volume (e.g., less than (lower than) the first volume) and the second sound at a fourth volume (e.g., greater than (higher than) the second volume).

The electronic device according to one or more embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that one or more embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software (e.g., the program 140) including one or more instructions that are stored in a storage medium (e.g., internal memory 136 or external memory 138) that is readable by a machine (e.g., the electronic device 101, 200, 300, or 401). For example, a processor (e.g., the processor 120 or 420) of the machine (e.g., the electronic device 101, 200, 300, or 401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. Some of the plurality of entities may be separately disposed in different components. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device comprising:
a first sensor;
a speaker;
a display;
memory storing instructions; and
a processor operatively connected with the first sensor, the speaker, the display, and the memory,
wherein the instructions, when executed by the processor, cause the wearable electronic device to:
display, through the display, first content in a first virtual area, which corresponds to a first direction with respect to the wearable electronic device, among a plurality of virtual areas,
display, through the display, second content in a second virtual area, which corresponds to a second direction with respect to the wearable electronic device, among the plurality of virtual areas,
based on identifying, through the first sensor, that a gaze of a user wearing the wearable electronic device is directed toward the first direction, output, through the speaker, a first sound of the first content at a first volume and a second sound of the second content at a second volume, wherein the first volume is different from the second volume, and
based on identifying, through the first sensor, that the gaze of the user moves from the first direction to the second direction, output, through the speaker, the first sound at a third volume different from the first volume and the second sound at a fourth volume different from the second volume.

2. The wearable electronic device of claim 1, wherein the first volume is greater than the second volume, the third volume is less than the first volume, and the fourth volume is greater than the second volume,
wherein the instructions, when executed by the processor, further cause the wearable electronic device to determine the third volume and the fourth volume based on a number of virtual areas between the first virtual area and the second virtual area, and
wherein, as the number of the virtual areas between the first virtual area and the second virtual area increases, a difference between the first volume and the third volume increases, and a difference between the second volume and the fourth volume increases.

3. The wearable electronic device of claim 1, wherein the instructions, when executed by the processor, further cause the wearable electronic device to:
determine an output volume of the first sound to be the third volume decreased from the first volume by a volume corresponding to a distance where the gaze of the user moves from the first direction to the second direction, and
determine an output volume of the second sound to be the fourth volume increased from the second volume by the volume corresponding to the distance.

4. The wearable electronic device of claim 1, wherein the instructions, when executed by the processor, further cause the wearable electronic device to:
based on identifying that the gaze of the user wearing the wearable electronic device is directed toward the first direction, apply a filter effect to the second sound, and output the second sound to which the filter effect is applied, and
based on identifying that the gaze of the user moves from the first direction to the second direction, apply the filter effect to the first sound, and output the first sound to which the filter effect is applied and the second sound to which the filter effect is not applied.

5. The wearable electronic device of claim 1, wherein the instructions, when executed by the processor, further cause the wearable electronic device to:
output a specified sound related to at least one object included in the first content, and
allow a position of a sound image of the specified sound to correspond to a position of a sound image of the second sound.

6. The wearable electronic device of claim 1, wherein the instructions, when executed by the processor, further cause the wearable electronic device to:
identify a gesture of the user corresponding to a specified gesture for adjusting a position of the first virtual area in a state in which the gaze of the user is directed toward the first direction,
adjust the position of the first virtual area, and
based on the adjusted position of the first virtual area, adjust an output volume of the first sound.

7. The wearable electronic device of claim 1, wherein the instructions, when executed by the processor, further cause the wearable electronic device to:
identify that the gaze of the user is directed toward the first direction in a state in which the wearable electronic device is worn on a head of the user and a first wearable electronic device is worn on a right wrist of the user, wherein the second direction corresponds to a right direction with respect to a direction of the gaze of the user, and
obtain notification information related to the second content and transmit the notification information to the first wearable electronic device.

8. The wearable electronic device of claim 1, wherein a position of a sound image of the first sound corresponds to the first direction, and
wherein a position of a sound image of the second sound corresponds to the second direction.

9. The wearable electronic device of claim 1, further comprising a second sensor,
wherein the instructions, when executed by the processor, further cause the wearable electronic device to:
based on identifying, through the first sensor, that the gaze of the user wearing the wearable electronic device is directed toward the first direction and identifying, through the second sensor, that the wearable electronic device is directed toward the first direction, output, through the speaker, the first sound of the first content at the first volume, and
based on identifying, through the first sensor, that the gaze of the user moves from the first direction to the second direction and identifying, through the second sensor, that the wearable electronic device moves from the first direction to the second direction, output, through the speaker, the first sound at the third volume and the second sound at the fourth volume.

10. A method for operating a wearable electronic device, the method comprising:
displaying, through a display of the wearable electronic device, first content in a first virtual area, which corresponds to a first direction with respect to the wearable electronic device, among a plurality of virtual areas;
displaying, through the display of the wearable electronic device, second content in a second virtual area, which corresponds to a second direction with respect to the wearable electronic device, among the plurality of virtual areas;
based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume, wherein the first volume is different from the second volume; and
based on identifying, through the first sensor, that the gaze of the user moves from the first direction to the second direction, outputting, through the speaker, the first sound at a third volume different from the first volume and the second sound at a fourth volume different from the second volume.

11. The method of claim 10, further comprising determining the third volume and the fourth volume based on a number of virtual areas between the first virtual area and the second virtual area among the plurality of virtual areas,
wherein the first volume is greater than the second volume, the third volume is less than the first volume, and the fourth volume is greater than the second volume, and
wherein a difference between the first volume and the third volume, and a difference between the second volume and the fourth volume increases as the number of the virtual areas between the first virtual area and the second virtual area increases.

12. The method of claim 10, further comprising:
determining an output volume of the first sound to be the third volume decreased from the first volume by a volume corresponding to a distance where the gaze of the user moves from the first direction to the second direction; and
determining an output volume of the second sound to be the fourth volume increased from the second volume by a volume corresponding to the distance.

13. The method of claim 10, further comprising:
based on identifying that the gaze of the user wearing the wearable electronic device is directed toward the first direction, applying a filter effect to the second sound, and outputting the second sound to which the filter effect is applied; and
based on identifying that the gaze of the user moves from the first direction to the second direction, applying the filter effect to the first sound, and outputting the first sound to which the filter effect is applied and the second sound to which the filter effect is not applied.

14. The method of claim 10, further comprising outputting a specified sound related to at least one object included in the first content.

15. A storage medium storing computer-readable instructions, the instructions, when executed by a processor of a wearable electronic device, enabling the wearable electronic device to perform at least one operation, the at least one operation comprising:
displaying, through a display of the wearable electronic device, first content in a first virtual area, which corresponds to a first direction with respect to the wearable electronic device, among a plurality of virtual areas;
displaying, through the display of the wearable electronic device, second content in a second virtual area, which corresponds to a second direction with respect to the wearable electronic device, among the plurality of virtual areas;
based on identifying, through a first sensor of the wearable electronic device, that a gaze of a user wearing the wearable electronic device is directed toward the first direction, outputting, through a speaker of the wearable electronic device, a first sound of the first content at a first volume and a second sound of the second content at a second volume, wherein the first volume is different from the second volume; and
based on identifying, through the first sensor, that the gaze of the user moves from the first direction to the second direction, outputting, through the speaker, the first sound at a third volume different from the first volume and the second sound at a fourth volume different from the second volume.
